# EUROPEAN PATENT APPLICATION

(11) **EP 4 181 571 A1**
(43) Date of publication of application: **17.05.2023**
(21) Application number: 20944993.3
(22) Date of filing: 13.07.2020
(51) Int. Cl.: H04W 36/34, H04W 24/04

(54) **COMMUNICATION METHOD, AND COMMUNICATION DEVICE**

(71) Applicant: Huawei Technologies Co., Ltd., Longgang Shenzhen, Guangdong 518129 (CN)
(72) Inventor: ZHU, Yuanping, Shenzhen, Guangdong 518129 (CN); SHI, Yulong, Shenzhen, Guangdong 518129 (CN); LIU, Jing, Shenzhen, Guangdong 518129 (CN); CAO, Zhenzhen, Shenzhen, Guangdong 518129 (CN)
(74) Representative: Isarpatent
(86) International application number: PCT/CN2020/101585
(87) International publication number: WO 2022/011496

(57) **Abstract**

This application provides a communication method. The method includes: When a radio link failure RLF occurs on a first communication device connected to a first donor network device, the first communication device performs an RLF recovery process, and connects to a second donor network device. The first communication device determines that the first donor network device and the second donor network device are different network devices. The first communication device sends first information to a second communication device, where the first information indicates the second communication device to send a radio resource control RRC re-establishment request message, or indicates the second communication device to obtain system information sent by the first communication device. Using the technical solutions provided in this application can avoid a problem that a descendent IAB node or descendent UE cannot continue service data and signaling transmission because the descendent IAB node or the descendent UE is not aware that a parent node has changed a donor network device. Therefore, subsequent communication is ensured.

## Description

### TECHNICAL FIELD

This application relates to the communication field, and more specifically, to a communication method and apparatus.

### BACKGROUND

5th generation (5th generation, 5G) mobile communication comprehensively raises stricter requirements on various network performance indicators. It is in this context that an integrated access and backhaul (integrated access and backhaul, IAB) technology is developed. The IAB technology provides a solution to a poor propagation characteristic of high-frequency carriers and high costs. A wireless transmission solution is used for both access links (access links) and backhaul links (backhaul links) of the IAB technology, avoiding fiber deployment.

In an IAB network, a relay node (relay node, RN), which is also referred to as an IAB node (IAB node), may provide a radio access service for user equipment (user equipment, UE). Service data of the UE is transmitted by the IAB node connecting to an IAB donor (IAB donor) over a wireless backhaul link. In the IAB network, the IAB node may obtain an IP address from the IAB donor or an operation administration and maintenance (operation administration and maintenance, OAM) when initially accessing the network. The obtained IP address may be used for subsequent service transmission.

When a radio link failure (radio link failure, RLF) occurs on the backhaul link of the IAB node, the IAB node performs an RLF recovery process, that is, attempts to perform radio resource control (radio resource control, RRC) re-establishment. In the re-establishment process, the IAB node may select to re-access an original cell, or may select to access a new cell. If the IAB node successfully performs RLF recovery and the IAB node is still connected to an original IAB-donor-CU (IAB-donor-CU) after the re-establishment, an original communication link may be used for data transmission because the IAB-donor-CU is aware of a network topology relationship between the IAB node and a descendent node (which is a node connected to a cell served by the IAB node, and may be specifically a descendent IAB node or descendent UE). If the IAB node is connected to an original IAB-donor-CU via a new parent node, the IAB-donor-CU may re-establish a connection to the IAB node and a descendent IAB node or descendent UE of the IAB node based on the new network topology. Further, if the IAB node is connected to an original IAB-donor-CU via a new IAB-donor-DU, the IAB-donor-CU may allocate a new IP address to a descendent IAB node of the IAB node.

However, in a scenario in which the IAB node performs RLF recovery and connects to a new IAB-donor-CU, the new IAB-donor-CU is not aware of the network topology relationship between the IAB node and the descendent IAB node or the descendent UE of the IAB node, and the descendent IAB node or the descendent UE of the IAB node is not aware of the RLF recovery process of the IAB node serving as a parent node of the descendent IAB node or the descendent UE, either. Therefore, the descendent IAB node or the descendent UE of the IAB node cannot proactively initiate a request for re-establishing a connection to the new IAB-donor-CU. Consequently, communication of UE served by the IAB node is affected. How to avoid impact caused by handover of an IAB node serving UE on data communication efficiency of the UE has not been resolved yet in conventional technologies.

### SUMMARY

This application provides a communication method. According to the method, when a radio link failure occurs on an IAB node serving as a parent node and the IAB node performs recovery and connects to a new IAB donor, a descendent IAB node or descendent UE of the parent node can re-establish, together with the parent node, a connection to the new IAB donor. This avoids a problem that the descendent IAB node or the descendent UE cannot continue operating normally (to be specific, the descendent IAB node or the descendent UE cannot perform service transmission of the descendent IAB node or the descendent UE, and cannot provide a transmission service for nodes connected to the descendent IAB node or the descendent UE, either) because the descendent IAB node or the descendent UE is not aware that the parent node has changed an IAB donor and still attempts to establish a connection to an original IAB donor through the IAB node while the connection to the original IAB donor actually has been lost. Therefore, subsequent communication is ensured.

According to a first aspect, a communication method is provided. The method includes: When a radio link failure RLF occurs on a first communication device connected to a first donor network device, the first communication device performs an RLF recovery process, and connects to a second donor network device. The first communication device determines that the first donor network device and the second donor network device are different network devices. The first communication device sends first information to a second communication device, where the first information indicates the second communication device to send a radio resource control RRC re-establishment request message, or indicates the second communication device to receive system information from the first communication device, and the second communication device is a device that communicates with the first donor network device via the first communication device.

The second communication device is indicated to send the RRC re-establishment request message or to obtain the system information, so that the second communication device can connect, together with the first communication device, to the new donor network device or initiate the RLF recovery process. This avoids a problem that the second communication device cannot continue service data and signaling transmission because the second communication device is not aware that the first communication device serving as a parent node of the second communication device has changed a donor node. Therefore, subsequent communication is ensured.

Optionally, the first communication device in this embodiment of this application may be an IAB node or UE. The second communication device may be a communication device connected to a donor device via the first communication device, for example, a communication device that accesses a cell served by the first communication device (where the first communication device is the IAB node), or a communication device that communicates with the donor device via the first communication device (where the first communication device is the UE). The donor network device may also be referred to as a donor node, a donor base station, an IAB donor, or the like. When the first communication device is the UE, the donor network device may alternatively be a base station. The donor network device may be an access network element having functions of a complete base station, or an access network element in a separation form of a central unit and a distributed unit. When the donor network device is in the separation form of the central unit and the distributed unit, the donor network device in this embodiment of this application may be specifically a central unit of the donor network device. When the central unit of the donor network device is in a separation form of a user plane and a control plane, the donor network device in this embodiment of this application may be specifically a control plane part of the central unit of the donor network device. This is not limited in this embodiment of this application.

With reference to the first aspect, in some implementations of the first aspect, the system information includes an identifier of the second donor network device and/or length information of the identifier of the second donor network device.

Length information that includes an identifier of the donor network device is sent, so that the second communication device may determine whether a currently accessed donor network device is a new network device, to trigger a re-establishment request message and set up a connection to the new donor network device. Therefore, the subsequent communication is ensured.

With reference to the first aspect, in some implementations of the first aspect, that the first communication device determines that the first donor network device and the second donor network device are different network devices includes: The first communication device determines, based on an identifier of a newly accessed cell, that the accessed second donor network device is a network device different from the first donor network device.

The first communication device obtains the identifier of the newly accessed cell, and determines that the currently connected donor network device and an original donor network device are different network devices, so that the first communication device can be triggered to initiate a re-establishment request and/or an IP address obtaining request to the new donor network device. Therefore, the subsequent communication is ensured.

With reference to the first aspect, in some implementations of the first aspect, that the first communication device determines that the first donor network device and the second donor network device are different network devices includes: The first communication device receives second information sent by the second donor network device, where the second information indicates that the second donor network device and the first donor network device are different network devices.

It is indicated that the donor network device currently connected to the first communication device and an original donor network device are different network devices, so that the first communication device can be triggered to initiate a re-establishment request and/or an IP address obtaining request to the new donor network device. Therefore, the subsequent communication is ensured.

With reference to the first aspect, in some implementations of the first aspect, the second communication device is a first network device, and the method further includes: The first information further indicates the second communication device to send an IP address request message. Alternatively, the first communication device sends indication information to the second communication device, where the indication information indicates the second communication device to send an IP address request message.

When the second communication device is a network device, for example, an IAB node, the second communication device is indicated to obtain an IP address. Therefore, the subsequent communication is ensured.

With reference to the first aspect, in some implementations of the first aspect, the first communication device sends the first information via a backhaul adaptation protocol BAP layer control protocol data unit PDU or a media access control MAC layer control element.

According to a second aspect, a communication method is provided. The method includes: A second communication device receives first information from a first communication device, where the first information indicates the second communication device to send a radio resource control RRC re-establishment request message, or indicates the second communication device to receive system information from the first communication device, and the second communication device is a device that communicates with a first donor network device via the first communication device. The second communication device sends the radio resource control RRC re-establishment request message based on the first information.

The RRC re-establishment request message is sent or the system information is obtained based on received indication information, so that the second communication device can connect, together with the first communication device, to a new donor network device or initiate an RLF recovery process. This avoids a problem that the second communication device cannot continue service data and signaling transmission because the second communication device is not aware that the first communication device serving as a parent node of the second communication device has changed a donor node. Therefore, subsequent communication is ensured.

Optionally, the first communication device in this embodiment of this application may be an IAB node or UE. The second communication device may be a communication device connected to a donor device via the first communication device, for example, a communication device that accesses a cell served by the first communication device (where the first communication device is the IAB node), or a communication device that communicates with the donor device via the first communication device (where the first communication device is the UE). The donor network device may also be referred to as a donor node, a donor base station, an IAB donor, or the like. When the first communication device is the UE, the donor network device may alternatively be a base station. The donor network device may be an access network element having functions of a complete base station, or an access network element in a separation form of a central unit and a distributed unit. When the donor network device is in the separation form of the central unit and the distributed unit, the donor network device in this embodiment of this application may be specifically a central unit of the donor network device. When the central unit of the donor network device is in a separation form of a user plane and a control plane, the donor network device in this embodiment of this application may be specifically a control plane part of the central unit of the donor network device. This is not limited in this embodiment of this application.

With reference to the second aspect, in some implementations of the second aspect, that the second communication device sends the RRC re-establishment request message based on the first information includes: The second communication device receives the system information from the first communication device based on the first information. The second communication device determines that a second donor network device and the first donor network device are different network devices. The second communication device sends the RRC re-establishment request message.

The second communication device obtains the system information sent by the parent node, and determines, based on the system information, that the parent node is connected to the new donor network device, so that the second communication device can trigger the RRC re-establishment request message, and connect, together with the parent node, to the new donor network device. Therefore, the subsequent communication is ensured.

With reference to the second aspect, in some implementations of the second aspect, the system information includes an identifier of the second donor network device and/or length information of the identifier of the second donor network device.

The second communication device obtains length information that includes an identifier of the donor network device, and may determine whether a currently accessed donor network device is a new network device, to trigger a re-establishment request message and set up a connection to the new donor network device. Therefore, the subsequent communication is ensured.

With reference to the second aspect, in some implementations of the second aspect, the second communication device is a first network device, and the method further includes: The second communication device sends an IP address request message based on the first information. Alternatively, the second communication device receives indication information from the first communication device, where the indication information indicates the second communication device to send an IP address request message.

When the second communication device is a network device, for example, an IAB node, the second communication device sends an IP address obtaining request for obtaining a new IP address. Therefore, the subsequent communication is ensured.

According to a third aspect, a communication method is provided. The method includes: A second donor network device receives a radio resource control RRC re-establishment request message from a first communication device. The second donor network device determines a first donor network device based on the RRC re-establishment request message. The second donor network device sends request information to the first donor network device, where the request information is for requesting context information of the first communication device, the context information includes a topology relationship between the first communication device and a second communication device, and the second communication device is a device that communicates with the first donor network device via the first communication device. The second donor network device receives the context information from the first donor network device. The second donor network device sets up a connection to the second communication device based on the topology relationship.

The topology relationship of the first communication device that performs connection recovery is proactively obtained from the first donor network device, so that the second donor network device can proactively set up the connection to the second communication device, and the second communication device can connect, together with the first communication device, to a new donor network device. This avoids a problem that the second communication device cannot continue service data and signaling transmission because the second communication device is not aware that the first communication device serving as a parent node of the second communication device has changed a donor node. Therefore, subsequent communication is ensured.

Optionally, the first communication device in this embodiment of this application may be an IAB node or UE. The second communication device may be a communication device connected to a donor device via the first communication device, for example, a communication device that accesses a cell served by the first communication device (where the first communication device is the IAB node), or a communication device that communicates with the donor device via the first communication device (where the first communication device is the UE). The donor network device may also be referred to as a donor node, a donor base station, an IAB donor, or the like. When the first communication device is the UE, the donor network device may alternatively be a base station. The donor network device may be an access network element having functions of a complete base station, or an access network element in a separation form of a central unit and a distributed unit. When the donor network device is in the separation form of the central unit and the distributed unit, the donor network device in this embodiment of this application may be specifically a central unit of the donor network device. When the central unit of the donor network device is in a separation form of a user plane and a control plane, the donor network device in this embodiment of this application may be specifically a control plane part of the central unit of the donor network device. This is not limited in this embodiment of this application.

With reference to the third aspect, in some implementations of the third aspect, the second communication device is a first network device, and the method further includes: The second donor network device allocates an IP address to the second communication device based on the topology relationship.

Further, the second donor network device may proactively allocate the IP address to the second communication device based on the obtained topology relationship. Therefore the subsequent communication is ensured.

According to a fourth aspect, a communication method is provided. The method includes: A first donor network device receives request information from a second donor network device, where the request information is for obtaining context information of a first communication device, the context information includes a topology relationship between the first communication device and a second communication device, and the second communication device is a device that communicates with the first donor network device via the first communication device. The first donor network device sends the context information to the second donor network device.

The topology relationship between the first communication device and the second communication device is provided for the second donor network device, so that the second donor network device can set up a connection to the second communication device based on the topology relationship. This avoids a problem that the second communication device cannot continue service data and signaling transmission because the second communication device is not aware that the first communication device serving as a parent node of the second communication device has changed a donor node. Therefore, subsequent communication is ensured.

Optionally, the first communication device in this embodiment of this application may be an IAB node or UE. The second communication device may be a communication device connected to a donor device via the first communication device, for example, a communication device that accesses a cell served by the first communication device (where the first communication device is the IAB node), or a communication device that communicates with the donor device via the first communication device (where the first communication device is the UE). The donor network device may also be referred to as a donor node, a donor base station, an IAB donor, or the like. When the first communication device is the UE, the donor network device may alternatively be a base station. The donor network device may be an access network element having functions of a complete base station, or an access network element in a separation form of a central unit and a distributed unit. When the donor network device is in the separation form of the central unit and the distributed unit, the donor network device in this embodiment of this application may be specifically a central unit of the donor network device. When the central unit of the donor network device is in a separation form of a user plane and a control plane, the donor network device in this embodiment of this application may be specifically a control plane part of the central unit of the donor network device. This is not limited in this embodiment of this application.

According to a fifth aspect, a communication apparatus is provided. The apparatus includes a first processing module and a first sending module. The first processing module is configured to: when a radio link failure RLF occurs on the communication apparatus connected to a first donor network device, perform an RLF recovery process, and connect to a second donor network device. The first processing module is further configured to determine that the first donor network device and the second donor network device are different network devices. The first sending module is configured to send first information to a second communication device, where the first information indicates the second communication device to send a radio resource control RRC re-establishment request message, or indicates the second communication device to receive system information from the communication apparatus, and the second communication device is a device that communicates with the first donor network device via the communication apparatus.

With reference to the fifth aspect, in some implementations of the fifth aspect, the system information includes an identifier of the second donor network device and/or length information of the identifier of the second donor network device.

With reference to the fifth aspect, in some implementations of the fifth aspect, the first processing module is specifically configured to: determine, based on an identifier of a newly accessed cell, that the accessed second donor network device is a network device different from the first donor network device.

With reference to the fifth aspect, in some implementations of the fifth aspect, the apparatus further includes: a first receiving module, configured to receive second information sent by the second donor network device, where the second information indicates that the second donor network device and the first donor network device are different network devices.

With reference to the fifth aspect, in some implementations of the fifth aspect, the second communication device is a first network device. The first information further indicates the second communication device to send an IP address request message. Alternatively, the first sending module is further configured to: send indication information to the second communication device, where the indication information indicates the second communication device to send an IP address request message.

With reference to the fifth aspect, in some implementations of the fifth aspect, the communication apparatus sends the first information via a backhaul adaptation protocol BAP layer control protocol data unit PDU or a media access control MAC layer control element.

According to a sixth aspect, a communication apparatus is provided. The apparatus includes a second receiving module and a second sending module. The second receiving module is configured to receive first information from a first communication device, where the first information indicates the communication apparatus to send a radio resource control RRC re-establishment request message, or indicates the communication apparatus to receive system information from the first communication device, and the communication apparatus is a device that communicates with a first donor network device via the first communication device. The second sending module is configured to send the radio resource control RRC re-establishment request message based on the first information.

With reference to the sixth aspect, in some implementations of the sixth aspect, the second sending module is further configured to: receive the system information from the first communication device based on the first information. The apparatus further includes: a second processing module, configured to determine that a second donor network device and the first donor network device are different network devices. The second sending module is further configured to send the RRC re-establishment request message.

With reference to the sixth aspect, in some implementations of the sixth aspect, the updated system information includes an identifier of the second donor network device and/or length information of the identifier of the second donor network device.

With reference to the sixth aspect, in some implementations of the sixth aspect, the apparatus is a first network device, and the second sending module is further configured to: send an IP address request message based on the first information; or receive indication information from the first communication device, where the indication information indicates the communication apparatus to send an IP address request message.

According to a seventh aspect, a communication apparatus is provided. The apparatus includes a third receiving module, a third processing module, and a third sending module. With reference to the seventh aspect, in some implementations of the seventh aspect, the third receiving module is configured to receive a radio resource control RRC re-establishment request message from a first communication device. The third processing module is configured to determine a first donor network device based on the RRC re-establishment request message. The third sending module is configured to send request information to the first donor network device, where the request information is for requesting context information of the first communication device, the context information includes a topology relationship between the first communication device and a second communication device, and the second communication device is a device that communicates with the first donor network device via the first communication device. The third receiving module is further configured to receive the context information from the first donor network device. The third processing module is further configured to set up a connection to the second communication device based on the topology relationship.

With reference to the seventh aspect, in some implementations of the seventh aspect, the second communication device is a first network device, and the second processing module is further configured to: allocate an IP address to the second communication device based on the topology relationship.

According to an eighth aspect, a communication apparatus is provided. The apparatus includes a fourth receiving module and a fourth sending module. The fourth receiving module is configured to receive request information from a second donor network device, where the request information is for obtaining context information of a first communication device, the context information includes a topology relationship between the first communication device and a second communication device, and the second communication device is a device that communicates with the communication apparatus via the first communication device. The fourth sending module is configured to send the context information to the second donor network device.

According to a ninth aspect, a communication apparatus is provided. The communication apparatus has functions of implementing the method according to the foregoing aspects. The functions may be implemented by hardware, or may be implemented by hardware executing corresponding software. The hardware or the software includes one or more modules corresponding to the functions.

According to a tenth aspect, a communication apparatus is provided, including a processor. The processor is coupled to a memory, and is configured to invoke a computer program from the memory and run the computer program, to perform the method according to any one of the foregoing aspects or the possible implementations of the foregoing aspects.

According to an eleventh aspect, a communication apparatus is provided, including a processor and a memory. The memory is configured to store a computer program, and the processor is configured to invoke the computer program from the memory and run the computer program, so that the communication device performs the method according to any one of the foregoing aspects or the possible implementations of the foregoing aspects.

According to a twelfth aspect, an apparatus (for example, the apparatus may be a chip system) is provided. The apparatus includes a processor, configured to support the communication apparatus in implementing functions in the foregoing aspects. In a possible design, the apparatus further includes a memory, and the memory is configured to store program instructions and data that are necessary for the communication apparatus. When the apparatus is the chip system, the apparatus may include a chip, or may include a chip and another discrete component.

According to a thirteenth aspect, a computer-readable storage medium is provided, and is configured to store a computer program. The computer program includes instructions for performing the method according to any one of the foregoing aspects or the possible implementations of the foregoing aspects.

According to a fourteenth aspect, a computer program product is provided, including a computer program. When the computer program is run on a computer device, the computer device is enabled to perform the method according to the foregoing aspects.

According to a fifteenth aspect, a communication system is provided. The communication system includes a first communication device, a second communication device, a second donor network device, and a first donor network device. The first communication device is configured to perform a step performed by the first communication device in the first aspect or in solutions provided in embodiments of this application. The second communication device is configured to perform a step performed by the second communication device in the second aspect or in solutions provided in embodiments of this application. The second donor network device is configured to perform a step performed by the second donor network device in the third aspect or in solutions provided in embodiments of this application. The first donor network device is configured to perform a step performed by the first donor network device in the fourth aspect or in solutions provided in embodiments of this application.

These or other aspects of this application are more concise and easier to understand in descriptions of the following embodiments.

### BRIEF DESCRIPTION OF DRAWINGS

FIG. 1 is a schematic diagram of standalone IAB networking;
FIG. 2 is a schematic diagram of non-standalone IAB networking;
FIG. 3 is a schematic diagram of a user plane protocol stack of an IAB network;
FIG. 4 is a schematic diagram of a control plane protocol stack of an IAB network;
FIG. 5 is a schematic diagram of an IAB network system architecture according to an embodiment of this application;
FIG. 6 is a schematic diagram of a communication method according to an embodiment of this application;
FIG. 7 is a schematic diagram of another communication method according to an embodiment of this application;
FIG. 8 is a schematic diagram of another communication method according to an embodiment of this application;
FIG. 9 is a schematic diagram of another communication method according to an embodiment of this application;
FIG. 10 is a schematic diagram of another communication method according to an embodiment of this application;
FIG. 11 is a schematic diagram of a scenario of radio link failure recovery according to an embodiment of this application;
FIG. 12 is a schematic flowchart of radio link failure recovery according to an embodiment of this application;
FIG. 13 is another schematic flowchart of radio link failure recovery according to an embodiment of this application;
FIG. 14 is another schematic flowchart of radio link failure recovery according to an embodiment of this application;
FIG. 15 is another schematic flowchart of radio link failure recovery according to an embodiment of this application;
FIG. 16 is a schematic flowchart of F 1 interface re-establishment according to an embodiment of this application;
FIG. 17 is another schematic flowchart of F1 interface re-establishment according to an embodiment of this application;
FIG. 18 is a schematic diagram of a communication apparatus according to an embodiment of this application;
FIG. 19 is a schematic diagram of another communication apparatus according to an embodiment of this application;
FIG. 20 is a schematic diagram of another communication apparatus according to an embodiment of this application;
FIG. 21 is a schematic diagram of another communication apparatus according to an embodiment of this application;
FIG. 22 is another schematic diagram of a structure of a communication apparatus according to an embodiment of this application;
FIG. 23 is another schematic diagram of a structure of another communication apparatus according to an embodiment of this application;
FIG. 24 is another schematic diagram of a structure of another communication apparatus according to an embodiment of this application; and
FIG. 25 is another schematic diagram of a structure of another communication apparatus according to an embodiment of this application.

### DESCRIPTION OF EMBODIMENTS

The following describes the technical solutions of this application with reference to the accompanying drawings.

The technical solutions in embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and a future evolved communication system.

In embodiments of this application, a terminal device is a device having a wireless transceiver function, and may be a device deployed on land, including an indoor device or an outdoor device, a handheld device, a wearable device, or a vehicle-mounted device, may be deployed on water (for example, on a ship), or may be deployed in the air (for example, on an airplane, a balloon, or a satellite). The terminal device may communicate with a core network through a radio access network (radio access network, RAN), and exchange voice and/or data with the RAN. The terminal device may be a mobile phone (mobile phone), a tablet computer (Pad), a computer having a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. Sometimes, the terminal device may also be referred to as user equipment (user equipment, UE), a mobile station, a remote station, and the like. A specific technology, a device form, and a name that are used by the terminal device are not limited in embodiments of this application.

The access network device in embodiments of this application is a network device for connecting a terminal device to a wireless network. The access network device may be a node in the radio access network. The access network device may be referred to as a base station or a radio access network (radio access network, RAN) node (or device). A network device may be an evolved NodeB (NodeB, eNB, or e-NodeB, evolved NodeB) in a long term evolution (long term evolution, LTE) system or an LTE-advanced (LTE-Advanced, LTE-A) system, for example, a conventional macro base station eNB and a micro base station eNB in a heterogeneous network scenario; or may be a next generation NodeB (next generation NodeB, gNB) in a 5th generation (5th generation, 5G) mobile communication technology new radio (new radio, NR) system; or may be a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB or a home NodeB, HNB), a baseband unit (baseband unit, BBU), a baseband pool BBU pool, a Wi-Fi access point (access point, AP), or the like; or may include a central unit (centralized unit, CU) and a distributed unit (distributed unit, DU) in a cloud access network (cloud radio access network, CloudRAN) system. This is not limited in embodiments of this application. In a split deployment scenario in which the access network device includes the CU and the DU, the CU supports protocols such as a radio resource control (radio resource control, RRC) protocol, a packet data convergence protocol (packet data convergence protocol, PDCP), and a service data adaptation protocol (service data adaptation protocol, SDAP), and the DU mainly supports a radio link control (radio link control, RLC) layer protocol, a media access control (media access control, MAC) layer protocol, and a physical layer protocol.

Compared with 4th generation mobile communication, 5th generation (5G) mobile communication comprehensively raises stricter requirements on various network performance indicators. For example, 5G communication requires 1000 times of increase in capacity indicators, wider coverage, and ultra-high reliability and an ultra-low latency. In consideration of rich frequency resources on high-frequency carriers, networking using high-frequency small cells is increasingly popular in hotspot areas, to meet an ultra-high capacity requirement of 5G. The high-frequency carriers have disadvantages of poor propagation, severe attenuation when blocked, and small coverage. Therefore, a large quantity of small cells need to be densely deployed. Accordingly, it is quite costly to provide fiber backhaul for the large quantity of densely deployed small cells, and construction difficulties are high. Therefore, an economical and convenient backhaul solution is required. In addition, in consideration of the requirement of wide coverage, it is difficult and costly to deploy optical fibers for network coverage in some remote areas. Therefore, a flexible and convenient access and backhaul solution is also required. An integrated access and backhaul (integrated access and backhaul, IAB) technology provides a solution to resolve the foregoing two problems. A wireless transmission solution is used for both access links (access links) and backhaul links (backhaul links) of the IAB technology, avoiding optical fiber deployment.

In an IAB network, a relay node (relay node, RN), which is also referred to as an IAB node (IAB node), may provide a radio access service for user equipment UE. Service data of the UE is transmitted by the IAB node connecting to an IAB donor (IAB donor) over a wireless backhaul link. In this application, the IAB donor may also be referred to as a donor node (donor node), a donor base station (donor gNodeB, DgNB), a donor network device, or the like. The IAB node may include a mobile termination (mobile termination, MT) part and a distributed unit (distributed unit, DU) part. When the IAB node is oriented to a parent node of the IAB node, the IAB node may serve as a terminal device, namely, the MT. When the IAB node is oriented to a child node (where the child node may be another IAB node or common UE), the IAB node is considered as a network device, that is, serves as the DU. The MT part of the IAB node has all or a part of functions of UE. The donor node DgNB may be an access network element having functions of a complete base station, or an access network element in a separation form of a central unit (centralized unit, CU) and a distributed unit (distributed unit, DU). The donor node is connected to a core network (for example, connected to a 5G core network or a 5GC) element serving the UE, and provides a wireless backhaul function for the IAB node. For ease of description, the central unit of the donor node is referred to as a donor CU (donor CU, or is directly referred to as a CU) for short, and the distributed unit of the donor node is referred to as a donor DU (donor DU) for short. Alternatively, the donor CU may be in a separation form of a control plane (control plane, CP) and a user plane (user plane, UP). For example, the CU may include one CU-CP and one (or more) CU-UPs.

In a current 5G standard, in consideration of small coverage of high-frequency bands, multi-hop networking may be used in the IAB network, to ensure network coverage performance. In addition, in consideration of the requirement of service transmission reliability, the IAB node may be designed to support dual connectivity (Dual connectivity, DC) or multi-connectivity (multi-connectivity), to cope with potential exceptions occurring on the backhaul links, for example, link interruption or blockage (blockage) and load fluctuation, to improve transmission reliability. Therefore, the IAB network supports multi-hop networking, and may further support multi-connectivity networking. There is at least one transmission path including multiple links between the UE served by the IAB node and the IAB donor. There are multiple nodes on a transmission path such as UE, one or more IAB nodes, and an IAB donor (where an IAB-donor-DU part and an IAB-donor-CU part are further included if the IAB donor is in a separation form of a CU and a DU). Each IAB node considers an adjacent node that provides access and backhaul services for the IAB node as a parent node of the IAB node. Accordingly, the IAB node may be considered as a child node of the parent node.

Further, the UE in the IAB network may further provide a network connection for descendent UE of the UE via a UE-to-network architecture or a UE-to-UE architecture.

In embodiments of this application, a device serving as a parent node may alternatively be UE. In this case, the UE serves as a relay node in the UE-to-network scenario or the UE-to-UE scenario. In this case, the donor network device in embodiments of this application may be a base station device (for example, a 5G base station device gNB or an LTE base station eNB).

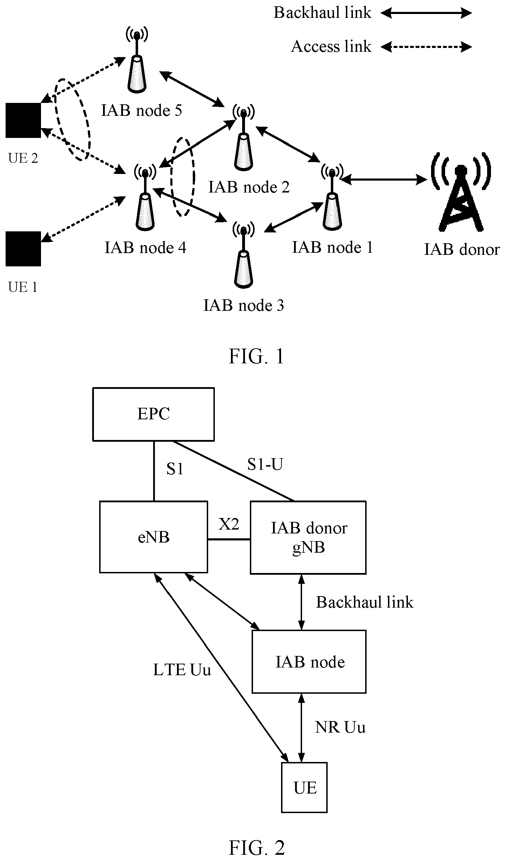

FIG. 1 is a schematic diagram of standalone IAB networking in conventional technologies. In the figure, a parent node of IAB node 1 is an IAB donor, IAB node 1 is a parent node of IAB node 2 and IAB node 3, both IAB node 2 and IAB node 3 are parent nodes of IAB node 4, and a parent node of IAB node 5 is IAB node 3. An uplink data packet of UE may be transmitted to a donor site, namely, the IAB donor, via one or more IAB nodes; and then sent by the IAB donor to a mobile gateway device (for example, a user plane function unit UPF in a 5G core network). A downlink data packet is received by the IAB donor from the mobile gateway device and then sent to the UE via the IAB node. In the standalone (standalone, SA) IAB networking shown in FIG. 1, both the IAB node and the UE are connected to a network only through NR-standard air interfaces. It should be understood that the standalone IAB networking scenario shown in FIG. 1 is merely an example. In an IAB scenario of a combination of multi-hop and multi-connectivity, there are more other possibilities. For example, the IAB donor in the figure and a descendent IAB node of another IAB donor provides dual connectivity to serve the UE. This is not limited in this application.

The IAB network also supports non-standalone (non-standalone, NSA) networking. FIG. 2 is a schematic diagram of non-standalone IAB networking. An IAB node supports dual connectivity in 4G and 5G networks, namely, EN-DC (E-UTRAN NR dual connectivity). An LTE base station eNB is a master base station (master eNB, MeNB), which provides an LTE air interface (LTE Uu) connection for the IAB node, and sets up an S1 interface with a 4G core network evolved packet core (evolved packet core, EPC) for user plane and control plane transmission. An IAB donor gNB is a secondary base station, which provides an NR air interface (NR Uu) connection for the IAB node, and sets up an S1 interface with the core network EPC for user plane transmission. Similarly, UE also supports the EN-DC. The UE is connected to the master base station eNB through the LTE Uu interface, and is connected to a secondary base station IAB node through the NR Uu interface. The secondary base station of the UE may also be an IAB donor gNB. The non-standalone IAB networking scenario in this application may also be referred to as an IAB EN-DC networking scenario.

It should be understood that FIG. 2 is merely a networking example. The NSA scenario of an IAB network also supports multi-hop IAB networking. For example, the UE in FIG. 2 may be another IAB node, to be specific, an IAB node may be connected to the IAB donor gNB over a multi-hop wireless backhaul link. This is not limited in this application.

In current discussion of the IAB network, it is determined to introduce a new protocol layer, namely, a backhaul adaptation protocol (backhaul adaptation protocol, BAP) layer, into a wireless backhaul link. The protocol layer is located above a radio link control (radio link control, RLC) layer, and implements functions such as routing of a data packet on the wireless backhaul link and bearer mapping.

An F1 interface needs to be set up between an IAB node (or an IAB-DU part) and a donor node (or an IAB-donor-CU). The interface supports a user plane protocol (F 1 -U) and a control plane protocol (F 1 -C). The user plane protocol includes one or more of the following protocol layers: a general packet radio service (General Packet Radio Service, GPRS) tunneling protocol user plane (GPRS tunneling protocol user plane, GTP-U) protocol layer, a user datagram protocol (user datagram protocol, UDP) layer, an internet protocol (internet protocol, IP) layer, and the like. The control plane protocol of the interface includes one or more of the following protocol layers: an F1 application protocol (F1 application protocol, FlAP) layer, a stream control transport protocol (stream control transport protocol, SCTP) layer, an IP layer, and the like.

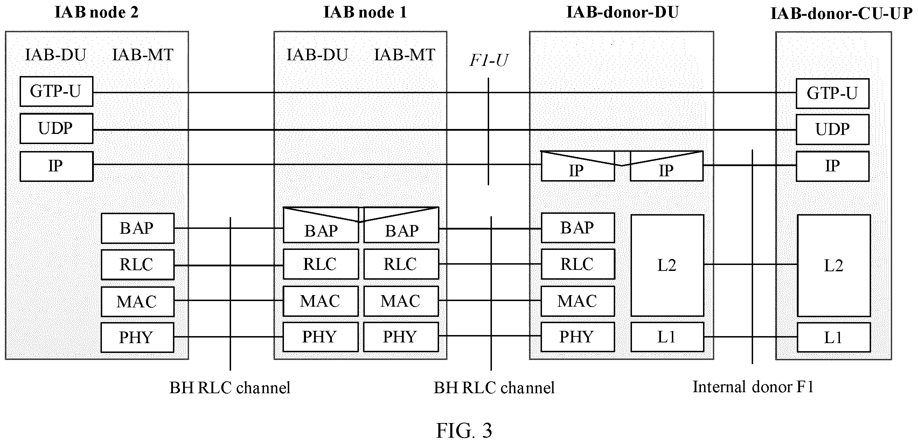

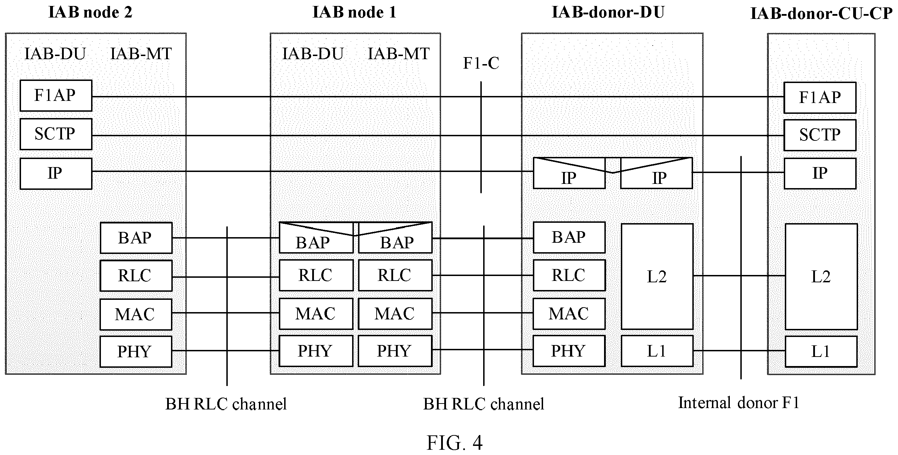

FIG. 3 and FIG. 4 are respectively schematic diagrams of a user plane protocol stack and a control plane protocol stack of the IAB network. For a specific implementation process, refer to the conventional technologies. Details are not described in embodiments of this application. With the use of the control plane of the F1 interface, interface management, IAB-DU management, UE context related configuration, and the like may be performed between the IAB node and the IAB donor node. With the use of the user plane of the F 1 interface, functions such as user plane data transmission and downlink transmission status feedback may be performed between the IAB node and the IAB donor node.

In the current IAB network, when an IAB node initially accesses the network, the IAB node may obtain an IP address used by a DU from an IAB donor or an OAM. The obtained IP address may be used for subsequent service transmission of the IAB node (which may be specifically the IAB-DU part), for example, transmission of an F1 interface service or a non-F1 interface service. The IP address obtained by the IAB node is related to an IAB-donor-DU to which the IAB node is connected. This ensures that the IP address of the IAB node is reachable through IP routing.

When a radio link failure occurs on the IAB node in the IAB network, the IAB node performs an RLF recovery process, in other words, attempts to re-establish an RRC connection. In the re-establishment process, the IAB node may select to re-access an original cell, or may select to access a new cell. If the IAB node successfully performs RLF recovery and the IAB node is still connected to an original IAB-donor-CU after the re-establishment, an original communication link may be used for data transmission because the IAB-donor-CU is aware of a network topology relationship between the IAB node and a descendent IAB node or descendent UE (which is an IAB node or UE connected to a serving cell of the IAB node). If the IAB node is connected to an original IAB-donor-CU via a new parent node, the IAB-donor-CU may re-establish a connection to the IAB node and a descendent IAB node or descendent UE of the IAB node based on the new network topology. Further, if the IAB node is connected to an original IAB-donor-CU via a new IAB-donor-DU, the IAB-donor-CU may allocate a new IP address to a descendent IAB node of the IAB node.

However, in a scenario in which the IAB node serving as a parent node performs RLF recovery and connects to a new IAB-donor-CU, or after the IAB node serving as a parent node in the IAB network determines to disconnect from an initial IAB-donor-CU and connect to a new IAB-donor-CU, the new IAB-donor-CU is not aware of a network topology relationship between the IAB node and a descendent IAB node or descendent UE of the IAB node. In addition, the descendent IAB node or the descendent UE of the IAB node cannot initiate a request for re-establishing a connection to the new IAB-donor-CU, and further cannot continue operating normally (to be specific, the descendent IAB node or the descendent UE cannot perform service transmission of the descendent IAB node or the descendent UE, and cannot provide a transmission service for another node connected to the descendent IAB node or the descendent UE, either) because the descendent IAB node or the descendent UE is not aware of an RLF recovery process of the IAB node serving as the parent node of the descendent IAB node or the descendent UE and still attempts to establish a connection to an initial IAB donor through the IAB node while the connection to the original IAB donor actually has been lost. Therefore, for the descendent IAB node or the descendent UE of the IAB node, how to recover and re-establish a connection for subsequent communication has not been resolved yet in the conventional technologies. This application provides a communication method. After a radio link failure occurs on a parent IAB node and the parent IAB node performs recovery and connects to a new donor network device, or after a parent IAB node determines to disconnect from an initial donor network device and connect to a new donor network device, a descendent node or a descendent terminal device of the parent IAB node may trigger re-establishment of a connection to the donor network device. This avoids a problem that the descendent IAB node or the descendent UE cannot continue service data and signaling transmission because the descendent IAB node or the descendent UE is not aware that the parent IAB node has changed an IAB donor network device. Therefore, subsequent communication is ensured.

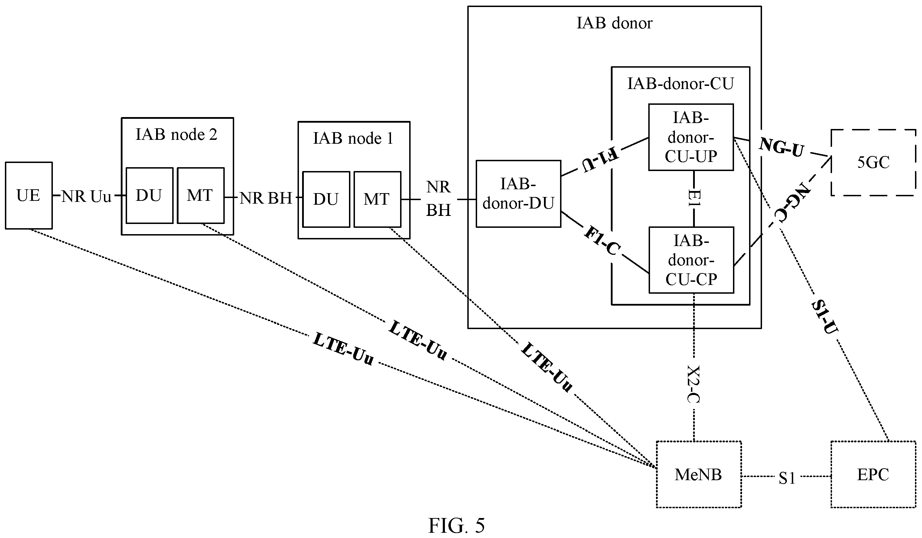

FIG. 5 is a schematic diagram of an IAB network system architecture according to an embodiment of this application. As shown in FIG. 5, the system architecture includes standalone (SA) IAB networking and non-standalone (NSA) IAB networking. For system architectures of the two networking scenarios, refer to the foregoing descriptions of standalone networking and non-standalone networking. In the Background description, it is mentioned that an IAB node includes an MT part and a DU part, an IAB donor may be further divided into a DU part and a CU part, and the CU may be further divided into a CU-CP part and a CU-UP part. FIG. 5 further shows, based on specific nodes, an example architecture in which the IAB node is connected to the IAB donor over a wireless backhaul link.

When the IAB node operates in SA mode, the IAB donor can be connected to a 5G core (5G core, SGC) network, which is denoted by dot-dashed lines in the figure. An IAB-donor-CU-CP is connected to a control plane network element (for example, an access and mobility management function AMF) in the SGC through an NG control plane interface, and an IAB-donor-CU-UP is connected to a user plane network element (for example, a user plane function UPF) in the SGC through an NG user plane interface. When the IAB node operates in NSA mode (or EN-DC mode), the IAB-donor-CU-UP can be connected to an EPC (for example, connected to a serving gateway (serving gateway, SGW)) through an S1 user plane interface. There is an LTE Uu air interface connection between an MeNB and the MT of the IAB node. There is an X2-C interface between the MeNB and the IAB-donor-CU-CP. The MeNB is connected to the EPC through an S1 interface (including an S1 interface user plane and an S1 interface control plane). These are denoted by dotted lines in the figure.

In embodiments of this application, a first communication device may be a parent node, and a second communication device may be a descendent node (a descendent IAB node or descendent UE). For example, the parent node IAB node 1 in FIG. 1 may be the first communication device, and the descendent nodes IAB node 2 and IAB node 3 of the parent node IAB node 1 may be the second communication devices. In this case, the second communication devices (IAB node 2 and IAB node 3) may communicate with an IAB donor via the first communication device (IAB node 1).

In embodiments of this application, the first communication device may be referred to as a parent node, a parent IAB node, or the like; and the second communication device may be referred to as a descendent node of the parent node, where the descendent node may be an IAB node or descendent UE. This is not limited in this application.

It should be understood that features or content marked by dashed lines in the accompanying drawings in embodiments of this application may be understood as optional operations or optional structures in embodiments of this application.

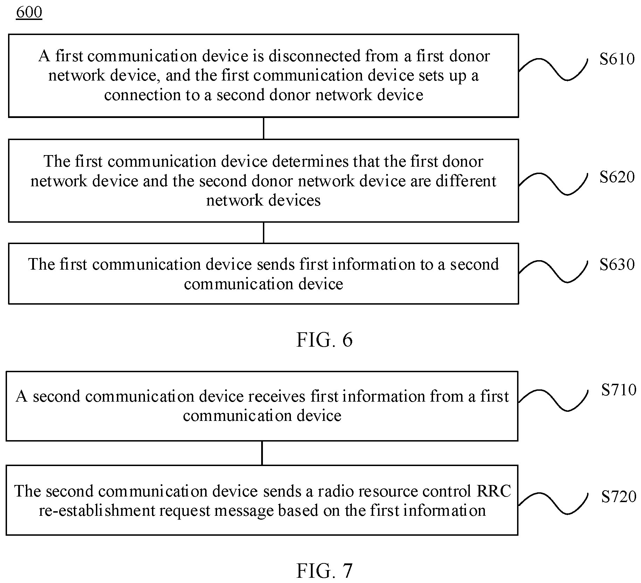

FIG. 6 is a schematic diagram of a communication method according to an embodiment of this application. As shown in FIG. 6, the method includes steps S610 to S630. The following describes these steps in detail.

S610: A first communication device is disconnected from a first donor network device, and the first communication device sets up a connection to a second donor network device.

When a radio link failure RLF occurs on the first communication device connected to the first donor network device, the first communication device performs an RLF recovery process, and connects to the second donor network device.

In another embodiment, the first communication device may proactively determine to disconnect from the first donor network device and connect to the second donor network device. For example, the first communication device may determine, based on a result of performing measurement, that signal quality of a currently connected cell is less than a preset threshold T1 and signal quality of another surrounding cell is greater than a preset threshold T2; or that signal quality of a currently connected cell of the first communication device is poorer than signal quality of another surrounding cell and a difference is greater than or equal to a preset threshold T3, and then the first communication device may disconnect from the currently connected cell and connect to a new cell. Signal quality of a cell may be, for example, reference signal received power (reference signal received power, RSRP) of the cell, reference signal received quality (reference signal received quality, RSRQ) of the cell, or a measured signal to interference plus noise ratio (signal to interference plus noise ratio, SINR) of the cell.

In another possible embodiment, conditional handover (Conditional handover) may be configured for the first communication device. For example, when connecting to the first donor network device, the first communication device obtains configuration information related to the conditional handover in advance, where the configuration information includes necessary configuration (for example, configuration information that is generated by the second donor network device and that is required for the first communication device to be handed over to the second donor network device) required for setting up the connection to the second donor network device. The first communication device is further configured with a preset condition for triggering the conditional handover. When the preset condition is met, the first communication device performs a handover process based on the necessary configuration that is obtained in advance and that is required for setting up the connection to the second donor network device, and sets up the connection to the second donor network device. The preset condition may be as follows. Signal quality of a currently connected cell is less than a preset threshold T1 and signal quality of a candidate cell is greater than a preset threshold T2. Alternatively, signal quality of a cell currently connected to the first communication device is poorer than signal quality of a candidate cell, and a difference is greater than or equal to a preset threshold T3. Alternatively, when an RLF occurs or handover fails, the first communication device selects a new cell served by a parent node connected to the second donor network device for access, where the new cell is one of candidate cells included in the configuration information that is obtained in advance and that is related to the conditional handover. In this case, the first communication device attempts to perform conditional handover and connect to the second donor network device. For more preset conditions related to the conditional handover, refer to the conventional technologies. Details are not described herein.

In another possible embodiment, when a handover failure or a conditional handover failure occurs on the first communication device, an RRC re-establishment process needs to be performed, and a selected new cell for access is a cell served by a parent node connected to the second donor network device. After performing the RRC re-establishment process, the first communication device is connected to the second donor network device via the parent node.

In another possible embodiment, the first communication device receives indication information sent by a parent node, and sets up the connection between the first communication device and the second donor network device based on the indication information. Specifically, the indication information may be a wireless backhaul link RLF notification sent by the parent node, and indicates that an RLF occurs on the parent node and cannot be recovered. The first communication device performs an RLF recovery process, and a new cell for access is a cell served by a new parent node connected to the second donor network device. Alternatively, the indication information may further indicate the first communication device to send an RRC re-establishment request message to the second donor network device via the parent node, to set up the connection to the second donor network device.

S620: The first communication device determines that the first donor network device and the second donor network device are different network devices.

In an embodiment, the first communication device may proactively determine that the first donor network device and the second donor network device are different network devices. Specifically, the first communication device determines, based on an identifier of a newly accessed cell, that the accessed second donor network device is a network device different from the first donor network device.

It should be understood that a cell identifier (for example, an NR cell identifier (NR cell identifier, NCI)) includes an identifier of a base station gNB, and different IAB donor network devices correspond to different gNB identifiers. Therefore, the first communication device may determine, based on a gNB identifier in the identifier of the accessed cell, that the first communication device accesses the new donor network device. Further, after determining that the network devices are different, the first communication device may send an RRC message to the new donor network device and request to set up a connection to the new donor network device. Optionally, the RRC message may further carry information for requesting an IP address (which may specifically include a quantity of IP addresses for the following different purposes: transmitting an F1 interface control plane message, transmitting an F1 interface user plane message, transmitting a non-F1 interface message, or transmitting all services).

In another embodiment, the first communication device may alternatively determine, based on an indication message sent by the new donor network device, that the second donor network device and the first donor network device are different network devices. Specifically, the first communication device receives second information sent by the second donor network device, where the second information indicates that the second donor network device and the first donor network device are different network devices. Further, after determining that the network devices are different, the first communication device may send an IP address request message to the new donor network device.

In another embodiment, the first communication device receives the indication information sent by the parent node, and the first communication device may learn, based on the indication information, that the parent node has been connected to the new donor network device, namely, the second donor network device, that is different from the first donor network device to which the parent node is previously connected, and then sends the RRC re-establishment request message to the second donor network device via the parent node, to set up the connection to the second donor network device.

S630: The first communication device sends first information to a second communication device.

In an embodiment, the first information indicates the second communication device to send the radio resource control RRC re-establishment request message to the second donor network device via the first communication device.

In another embodiment, the first information indicates, to the second communication device, that the first communication device is disconnected from the originally connected first donor network device and is connected to the new donor network device. Optionally, the first information may further indicate the second communication device to perform the RLF recovery process.

In another embodiment, the first information indicates the second communication device to obtain and receive system information from the first communication device. The second communication device is a device that communicates with the first donor network device via the first communication device.

It should be understood that the system information may include the cell identifier, and a gNB ID included in the cell identifier may indicate whether the first donor network device and the second donor network device are same donor network devices. Therefore, the second communication device may determine, based on an identifier of a donor network device in the system information, that the donor network device connected to the second communication device is a different network device.

Optionally, when the first communication device is an IAB node, the second communication device is a communication device connected to a serving cell of the first communication device. Alternatively, when the first communication device is UE, the first communication device may serve as a relay device for data and signaling transmission between the second communication device and a donor network device.

It should be understood that, when the first communication device is the IAB node, the first communication device configures new system information after successfully connecting to the new second donor network device. In this case, the first communication device may indicate, via the first information, the second communication device to obtain the new system information configured by the first communication device. Optionally, the first communication device may indicate, via indication information or by sending a paging (paging) message, the second communication device to obtain the new system information.

Optionally, the new system information may include an identifier of the second donor network device and/or length information of the identifier of the second donor network device.

It should be understood that the identifier of the second donor network device may be represented by using different lengths, and the second communication device may determine, based on the length information of the identifier of the second donor network device included in the system information, whether the donor network device is a different network device.

The second communication device is indicated to send the RRC re-establishment request message or the second communication device is indicated to obtain the system message. In this way, after the parent node disconnects from the first donor network device and connects to the second donor network device, the second communication device may connect, together with the parent node, to the new second donor network device; or perform the RLF recovery process, to trigger an RRC connection re-establishment process. This avoids a problem that the second communication device cannot continue service data and signaling transmission because the second communication device is not aware that the first communication device has changed a donor node. Therefore, subsequent communication is ensured.

Further, when the second communication device is a network device, for example, an IAB node, the first communication device may further indicate the second communication device to obtain an IP address. Specifically, the second communication device is a first network device, and the method further includes: The first information further indicates the second communication device to send an IP address request message.

Alternatively, the first communication device sends indication information to the second communication device, where the indication information indicates the second communication device to send a message for requesting the IP address to the second donor network device.

The second communication device is indicated to obtain the IP address, so that the second communication device can obtain the IP address for data transmission. Therefore, the subsequent communication is ensured.

In this embodiment of this application, the message sent by the second communication device for requesting the IP address may specifically include: a type of the IP address that is requested to be obtained (for example, an IPv4-type IP address and/or an IPv6-type IP address), a quantity of IPv4/IPv6 addresses available for transmitting all types of services, a quantity of IPv4/IPv6 addresses that are requested for transmitting an F1-C service, a quantity of IPv4/IPv6 addresses that are requested for transmitting an F 1 -U service, a quantity of IPv4/IPv6 addresses that are requested for transmitting a non-F 1 service, an IPv6 address prefix that is requested for transmitting the F1-C service, an IPv6 address prefix that is requested for transmitting the F 1 -U service, and an IPv6 address prefix that is requested for transmitting the non-F 1 service. The second communication device sends different IP address request messages for different requirements. A specific type of the IP address requested to be obtained is not limited in this application.

Optionally, the first communication device sends the first information via a backhaul adaptation protocol BAP layer control protocol data unit PDU or a media access control MAC layer control element.

It should be understood that the first communication device in this embodiment of this application may be the IAB node, or may be the UE. For the latter possibility, to be specific, for a UE-to-network or UE-to-UE case in a scenario in which the UE serves as a relay node, the first donor network device and the second donor network device in this embodiment of this application may be base station devices (which may be 5G base station devices gNBs or LTE base stations eNBs). After a link failure occurs and the UE serving as a relay device performs recovery and connects to a new base station, the UE may send indication information to descendent UE connected to the UE, to indicate the descendent UE to connect, together with the UE, to the new base station or perform RLF recovery. For details, refer to the foregoing descriptions.

This embodiment of this application may be applied to various scenarios in which a parent node is connected to a new donor network device but a descendent node or descendent UE of the parent node is not aware of this. This is not limited in this embodiment of this application.

In this embodiment of this application, after disconnecting from the initial first donor network device and connecting to the new second donor network device, the first communication device serving as the parent node may send indication information to the descendent node or the descendent UE, so that the second communication device (the descendent node or the descendent UE) can trigger the RRC connection re-establishment process. This avoids the problem that the second communication device cannot continue service data and signaling transmission because the second communication device is not aware that the first communication device has changed a donor node. Therefore, the subsequent communication is ensured.

FIG. 7 is a schematic diagram of another communication method according to an embodiment of this application. As shown in FIG. 7, the method includes steps S710 and S720. The following describes the two steps in detail.

S710: A second communication device receives first information from a first communication device.

In an embodiment, the first information indicates the second communication device to send a radio resource control RRC re-establishment request message.

The RRC re-establishment request message is sent based on indication information, so that a connection can be set up with a new donor network device. Therefore, subsequent communication is ensured.

In another embodiment, the first information indicates the second communication device to receive system information from the first communication device. The second communication device is a device that communicates with a first donor network device via the first communication device.

In another embodiment, the first information indicates, to the second communication device, that the first communication device is disconnected from an originally connected first donor network device and is connected to the new donor network device. Further, the first information may indicate the second communication device to perform an RLF recovery process, where the RLF recovery process includes sending an RRC re-establishment request message.

S720: The second communication device sends the radio resource control RRC re-establishment request message based on the first information.

Specifically, the second communication device sends the RRC re-establishment request message to a second donor network device based on the first information.

In an embodiment, the second communication device may send the RRC re-establishment request message to the second donor network device based on the first information via the first communication device.

Optionally, the RRC re-establishment request message sent by the second communication device to the second donor network device carries a cause value for requesting, by the second communication device, to perform an RRC re-establishment process, where the cause value may indicate that the second communication device requests to perform the RRC re-establishment process because a radio link failure occurs on a parent node, or because the second communication device, together with a parent node, performs RLF recovery/RRC connection re-establishment.

In another possible implementation, after learning, based on the first information, that the first communication device is disconnected from the originally connected first donor network device and is connected to the new donor network device, the second communication device determines to perform the RLF recovery process. When performing the RLF recovery process, before sending the RRC re-establishment request message to the second donor network device, the second communication device may further perform processes such as cell selection and random access, to access a cell served by a third communication device connected to the second donor network device; or to connect, via a third communication device, to a third donor network device that is different from the second donor network device. In this case, the second communication device sends, via the third communication device, the RRC re-establishment request message to the second donor network device or the third donor network device that is different from the second donor network device. The third communication device and the first communication device may be a same communication device or different communication devices. The first donor network device is a donor network device connected to the second communication device before the second communication device receives the first information, a donor network device connected to the second communication device before the second communication device performs the RRC re-establishment process, a donor network device connected to the first communication device before the first communication device performs the RRC re-establishment process, or a donor network device connected to the first communication device before the radio link failure occurs. The second donor network device is a donor network device selected by the first communication device when the first communication device performs the radio link failure recovery process or the RRC re-establishment process. The second donor network device or the third donor network device may be a donor network device selected by the second communication device when the second communication device performs the RRC re-establishment process.

In another embodiment, the second communication device may be triggered, by receiving the system information from the first communication device, to send the RRC re-establishment request message. Specifically, the second communication device receives the system information from the first communication device based on the first information. The second communication device determines that the second donor network device and the first donor network device are different network devices. The second communication device sends the RRC re-establishment request message to the second donor network device.

It should be understood that after successfully connecting to the second donor network device, the first communication device updates the system information broadcast by the first communication device, and includes an identifier of the second donor device gNB in the system information, where different donor network devices correspond to different gNB identifiers. In this case, the second communication device may obtain, based on an indication of the first communication device, new system information configured by the first communication device; and determine, based on the identifier of the second donor device in the system information, that the second donor network device accessed by the first communication device is a network device different from the first donor network device. Therefore, the second communication device may determine, based on a cell identifier in the system information, that the first communication device accesses the new donor network device. In this case, the second communication device may connect, together with the first communication device, to the new second donor network device.

Optionally, the system information may include an identifier of the second donor network device and/or length information of the identifier of the second donor network device.

It should be understood that the identifier of the second donor network device may be represented by a field of different lengths. The second communication device may determine the identifier of the second donor network device based on the length information of the identifier of the second donor network device included in the system information (where for example, the system information includes a cell identifier NCI whose length is X bits, the first Y^{th} bits are the identifier of the second donor network device, X > Y, and X is usually a fixed value; and if the second communication device is aware of length information Y, the second communication device may learn that the first Y^{th} bits in the NCI are the identifier of the second donor network device); and further determine whether the second donor network device and the previously connected first donor network device are different network devices based on an identifier of the previously connected first donor network device (where before the second communication device obtains updated system information of a cell accessed by the second communication device, the identifier of the first donor network device is carried in old system information).

It should be understood that, after the first communication device receives the RRC re-establishment request message of the second communication device, the first communication device may encapsulate the RRC re-establishment request message into an FlAP message of the first communication device, and forward the FlAP message to the second donor network device, so that a connection between the second communication device and the second donor is set up. For a specific connection process, refer to the conventional technologies. Details are not described in this embodiment of this application.

In an embodiment, when the second communication device is a network device, for example, an IAB node, the second communication device further needs to obtain an IP address (for example, an IP address used by a DU part of the IAB node to perform service sending/receiving). Specifically, the second communication device is a first network device, and the method further includes: The second communication device sends an IP address request message based on the first information. Alternatively, the second communication device receives indication information from the first communication device, where the indication information indicates the second communication device to send an IP address request message to the second donor network device.

The IP address is obtained, so that the second communication device can obtain the IP address for data transmission. Therefore, the subsequent communication is ensured.

Optionally, the second communication device may send the IP address request message after setting up the connection to the new second donor network device. Specifically, the second communication device may send an RRC re-establishment complete (RRC Re-establishment Complete) message or an RRC setup complete (RRCSetupComplete) message to the second donor network device.

In another possible embodiment, a manner in which the second communication device obtains the IP address may be as follows. The second communication device notifies, via an RRC re-establishment complete message or an RRC setup complete message, the second donor network device that the second communication device is an IAB node, so that the second donor network device may proactively send, to the second communication device, an RRC message carrying the IP address.

Alternatively, in still another possible embodiment, a manner in which the second communication device obtains the IP address may be as follows. The second donor network device learns, based on obtained context information of the second communication device, that the second communication device is an IAB node, and then proactively sends, to the second communication device, an RRC message carrying the IP address.

In this embodiment of this application, the second communication device serving as a descendent node (which, for example, may be a descendent IAB node or descendent UE) of the parent node (the first communication device) may trigger the RRC re-establishment request message by obtaining the indication information sent by the first communication device, or may obtain the updated system information of the first communication device, so that the second communication device can trigger RRC connection re-establishment with a donor network device. This avoids a problem that the second communication device cannot continue service data and signaling transmission because the second communication device is not aware that the first communication device has changed a donor node. Therefore, the subsequent communication is ensured.

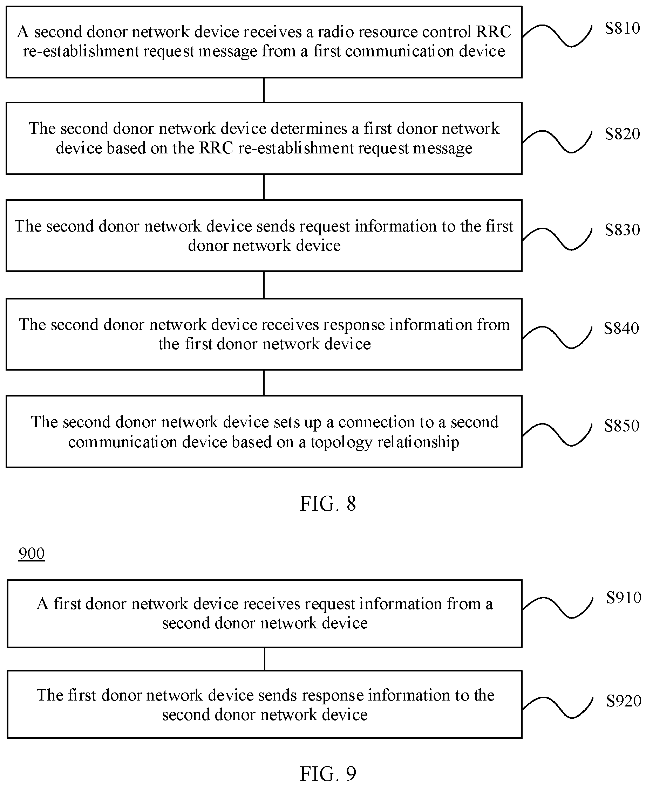

FIG. 8 is a schematic diagram of another communication method according to an embodiment of this application. As shown in FIG. 8, the method includes steps S810 to S850. The following describes these steps in detail.

S810: A second donor network device receives a radio resource control RRC re-establishment request message from a first communication device.

S820: The second donor network device determines a first donor network device based on the RRC re-establishment request message.

Optionally, the RRC re-establishment request message may include a physical cell identifier (physical cell identifier, PCI) of a primary cell (Primary Cell) to which the first communication device is connected before the first communication device performs an RRC re-establishment process. Based on the PCI identifier in the RRC re-establishment request message, the second donor network device may determine, based on identifiers of surrounding base stations maintained by the second donor network device and a list of cells served by these base stations, an identifier of a donor network device to which the first communication device is connected before the first communication device performs recovery or from which the first communication device disconnects, to determine the first donor network device.

S830: The second donor network device sends request information to the first donor network device.

In an embodiment, the request information is for requesting a topology relationship of the first communication device, and a second communication device is a device that communicates with the first donor network device via the first communication device. Optionally, the request message may be alternatively for requesting context information of the first communication device, where the context information may include a topology relationship between the first communication device and the second communication device.

It may be understood that, in this embodiment of this application, before sending the RRC re-establishment request message to the second donor network device, the first communication device may set up a connection to the first donor network device. Therefore, the first donor network device may store the context information of the first communication device, where the context information includes the topology relationship between the first communication device and the second communication device, and the second communication device is a descendent IAB node or descendent UE of the first communication device.

S840: The second donor network device receives response information from the first donor network device. The response information may include the context information of the first communication device, where the context information includes the topology relationship. Optionally, the response information may include the topology relationship.

S850: The second donor network device sets up a connection to the second communication device based on the topology relationship.

In an embodiment, the second communication device is a first network device, and the method further includes: The second donor network device allocates an IP address to the second communication device based on the topology relationship.

Optionally, the second donor network device may send an RRC re-establishment (RRCReestablishment) message or an RRC setup (RRC Setup) message to the second communication device (where the second communication device is the descendent IAB node or the descendent UE of the first communication device) based on the obtained topology relationship, where configuration information for the second communication device is included, and is for setting up an RRC connection between the second communication device and the second donor network device. Optionally, if the second communication device is an IAB node, the second donor network device may further send a downlink RRC message to the second communication device, where the downlink RRC message carries the IP address allocated to the second communication device, and the downlink RRC message may be an RRC Re-establishment/setup message, or a subsequent RRC reconfiguration (RRCReconfiguration) message that is after RRC re-establishment is completed.

Optionally, the second donor network device may further obtain context information of the second communication device from the first donor network device. The context information may include, for example, a quantity and a type (where the type may be, for example, an IPv4 address, an IPv6 address, or an IPv6 address prefix) of IP addresses used by the second communication device for all services, an F1-C service, an F1 -U service, or a Non-F1 service. Based on this, the second donor device may learn of information (including the quantity, the type, and the like) about the IP addresses that are required by the second communication device for transmitting services of different types, and then allocate the IP address to the second communication device in the manner described above.

In this embodiment of this application, the second donor network device proactively obtains the topology relationship of the second communication device, and proactively triggers RRC connection setup with the second communication device. This avoids a problem that the second communication device cannot continue service data and signaling transmission because the second communication device is not aware that the first communication device serving as a parent node of the second communication device has changed a donor node or a base station. Therefore, subsequent communication is ensured.

FIG. 9 is a schematic diagram of another communication method according to an embodiment of this application. As shown in FIG. 9, the method includes steps S910 and S920. The following describes the two steps in detail.

S910: A first donor network device receives request information from a second donor network device.

In an embodiment, the request information is for obtaining a topology relationship of a first communication device, and a second communication device is a device that communicates with the first donor network device via the first communication device. Optionally, the request information may be alternatively for requesting to obtain context information of the first communication device, where the context information includes a topology relationship between the first communication device and the second communication device.

It should be understood that, in a process in which the second communication device communicates with the first donor network device via the first communication device, the first donor network device stores the topology relationship between the first communication device and the second communication device.

S920: The first donor network device sends response information to the second donor network device.

The response information may include the context information of the first communication device, where the context information includes the topology relationship. Optionally, the response information may include the topology relationship.

Optionally, the response information may include context information of the second communication device, where the context information includes information (including a quantity, a type, and the like) about IP addresses that are required by the second communication device for transmitting services of different types.

In this embodiment of this application, the first donor network device provides the topology relationship between the first communication device and the second communication device for the second donor network device, so that the second donor network device can set up a connection to the second communication device based on the topology relationship. This avoids a problem that the second communication device cannot continue service data and signaling transmission because the second communication device is not aware that the first communication device serving as a parent node of the second communication device has changed a donor node/base station. Therefore, subsequent communication is ensured.

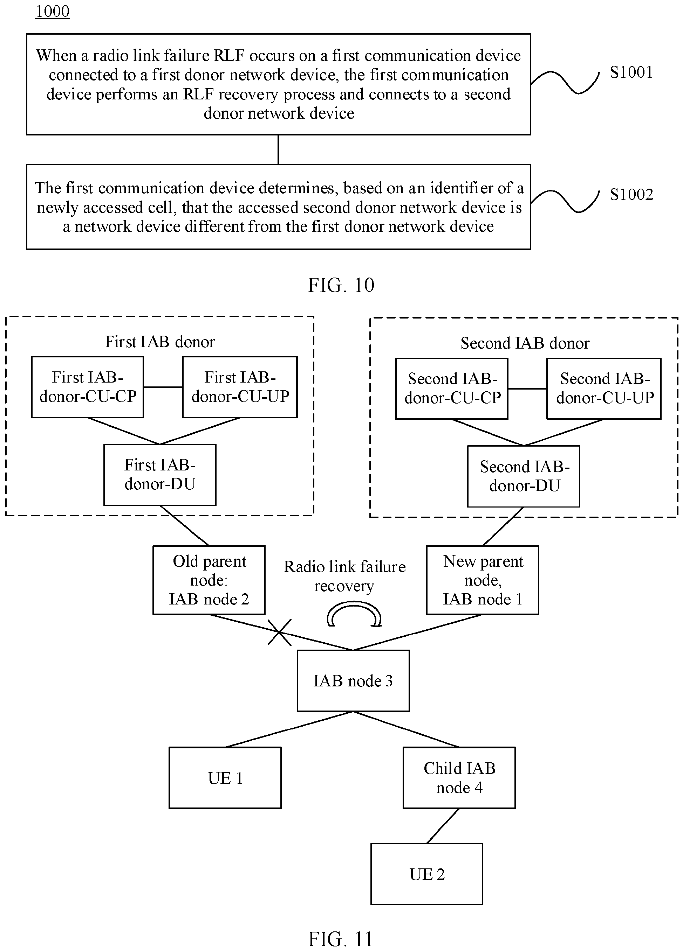

FIG. 10 is a schematic diagram of another communication method according to an embodiment of this application. As shown in FIG. 10, the method includes steps S 1001 and S 1002. The following describes the two steps in detail.

S1001: When a radio link failure RLF occurs on a first communication device connected to a first donor network device, the first communication device performs an RLF recovery process, and connects to a second donor network device.

S1002: The first communication device determines, based on an identifier of a newly accessed cell, that the accessed second donor network device is a network device different from the first donor network device.

Optionally, the first communication device may access the new cell in the RLF recovery process, and then determine, based on the identifier of the newly accessed cell, that the second donor network device is a different network device.

It should be understood that a cell identifier (for example, an NCI of a cell) includes an identifier of a base station gNB, and different IAB donor network devices correspond to different gNB identifiers. Therefore, after obtaining system information of a to-be-accessed cell, the first communication device may determine, based on a gNB identifier that is in an identifier of an accessed cell and that is carried in the system information, whether the first communication device is connected to a new donor network device after performing RLF recovery. Optionally, the system information of the cell to be accessed by the first communication device may further include length information of a gNB ID, to determine that the second donor network device is a different device. Specifically, the system information of the cell may include a cell identifier NCI whose length is X bits, where the first Y^{th} bits are an identifier of the second donor network device, X>Y, and X is usually a fixed value. If the first communication device is aware of length information Y, the first communication device may learn that the first Y^{th} bits in the NCI are the identifier of the second donor network device, and then the first communication device may further determine that the second donor network device and the first donor network device are different network devices based on an identifier of the previously connected first donor network device.

Further, after determining that the donor network device is different from the donor network device connected before the RLF recovery is performed, the first communication device may send an RRC message to the new donor network device, where the RRC message is for requesting to set up a connection to the new donor network device. Optionally, the first communication device may further send, to the new donor network device, an RRC message that carries a request for IP address information, where the RRC message may include quantity and type information (where a type may be, for example, an IPv4 address, an IPv6 address, or an IPv6 address prefix) of IP addresses for the following different purposes: transmitting an F1 interface control plane message (namely, an F1-C service), transmitting an F 1 interface user plane message (namely, an F1-U service), transmitting a non-F 1 interface message (namely, a non-F 1 service), or transmitting all services.

In this embodiment of this application, the first communication device that performs RLF recovery determines, based on the identifier of the accessed cell, that the first communication device accesses a different donor network device, so that the first communication device may further determine whether to send an IP address request message to the donor network device. Therefore, subsequent communication is ensured.

FIG. 11 is a schematic diagram of a scenario of radio link failure recovery according to an embodiment of this application. As shown in FIG. 11, a node on which a radio link failure occurs and that attempts to perform recovery is IAB node 3. IAB node 3 may provide access and backhaul services for one or more UE/child IAB nodes. FIG. 11 shows UE 1 and a child node IAB node 4 that access a cell served by IAB node 3. There is further UE 2 under IAB node 4, and UE 2 accesses a cell served by IAB node 4. In an actual network deployment scenario, IAB node 3 may further have one or more grandchild nodes (which are connected to the IAB node over wireless backhaul links having at least two hops), and IAB node 4 may further serve more UE, child nodes, or grandchild nodes. These are not shown one by one in the figure. However, it should be understood that these possible scenarios are not limited by the example shown in FIG. 11.

For ease of description, the IAB node or the UE connected to an IAB donor via IAB node 3 is referred to as a descendent IAB node (descendent IAB node) or descendent UE of IAB node 3.

IAB node 3 detects that the radio link failure occurs on a radio link between IAB node 3 and an old parent node (namely, IAB node 2 shown in FIG. 11); when attempting to perform link recovery, selects to access a cell served by a new parent node (namely, IAB node 1 shown in FIG. 11); and performs an RRC re-establishment (RRC re-establishment) process with a new target IAB donor (namely, a second IAB donor in the figure, or specifically, a second IAB-donor-CU or a second IAB-donor-CU-CP) via IAB node 1.

Alternatively, optionally, IAB node 3 may proactively choose to disconnect from a first IAB donor and connect to a second IAB donor. For example, IAB node 3 may determine, based on a result of performing measurement, that signal quality of a currently connected cell (a cell served by IAB node 2) is less than a preset threshold T1 and signal quality of another surrounding cell (a cell served by IAB node 1) is greater than a preset threshold T2; or that signal quality of a currently connected cell (a cell served by IAB node 2) of IAB node 3 is poorer than signal quality of another surrounding cell (a cell served by IAB node 1) and a difference is greater than or equal to a preset threshold T3, and IAB node 3 may disconnect from the currently connected cell and connect to a new cell (the cell served by IAB node 1). Signal quality of a cell may be, for example, RSRP of the cell, RSRQ of the cell, or a measured SINR.

Alternatively, optionally, conditional handover (Conditional handover) may be configured for IAB node 3. For example, when connecting to the first IAB donor, IAB node 3 obtains configuration information related to the conditional handover in advance, where the configuration information includes necessary configuration (for example, configuration information that is generated by the second IAB donor and that is required for IAB node 3 to be handed over to the second IAB donor) required for setting up a connection to the second IAB donor, and IAB node 3 is further configured with a preset condition for triggering the conditional handover. When the preset condition is met, IAB node 3 performs a handover process based on the necessary configuration that is obtained in advance and that is required for setting up the connection to the second IAB donor, and sets up the connection to the second IAB donor. The preset condition may be as follows. Signal quality of a currently connected cell is less than a preset threshold T1 and signal quality of a candidate cell is greater than a preset threshold T2. Alternatively, signal quality of a cell currently connected to IAB node 3 is poorer than signal quality of a candidate cell, and a difference is greater than or equal to a preset threshold T3. Alternatively, when an RLF occurs or handover fails, IAB node 3 selects a new cell served by a parent node connected to the second IAB donor for access, where the new cell is one of candidate cells included in the configuration information that is obtained in advance and that is related to the conditional handover. In this case, IAB node 3 attempts to perform conditional handover and connect to the second IAB donor. For more preset conditions related to the conditional handover, refer to the conventional technologies. Details are not described herein.

In another possible embodiment, when a handover failure or a conditional handover failure occurs on IAB node 3, an RRC re-establishment process needs to be performed, and a selected new cell for access is a cell served by a parent node connected to the second IAB donor. After performing the RRC re-establishment process, IAB node 3 is connected to the second IAB donor via the parent node.

In this embodiment of this application, an implementation scenario in which IAB node 3 may proactively choose to disconnect from the first IAB donor and connect to the second IAB donor is not limited. After determining to connect to the second IAB donor, the IAB node initiates an RRC re-establishment request message to the second IAB donor. For a specific process, refer to the following RLF recovery process performed by the IAB. For IAB node 3, in a process of performing RLF recovery, if IAB node 3 selects the cell served by the new parent node (IAB node 1) for access, IAB node 3 may determine, by using an identifier of the newly accessed cell, whether the newly accessed parent node is connected to the new second IAB donor, and specifically, may perform determining based on a cell identifier part included in system information of the accessed cell. This is because a cell identifier (for example, an NR cell identifier (NR cell identifier, NCI) of a cell) includes an identifier of a base station gNB, and different IAB donor network devices correspond to different gNB identifiers. Therefore, after obtaining system information of a to-be-accessed cell, IAB node 3 may determine, based on a gNB identifier that is in an identifier of an accessed cell and that is carried in the system information, whether IAB node 3 is connected to a new IAB donor after performing RLF recovery. Therefore, after determining that IAB node 3 is connected to the cell under the new target IAB donor, IAB node 3 may send an RRC message to the new IAB donor (namely, the second IAB donor, or specifically, the second IAB-donor-CU or the second IAB-donor-CU-CP) via the new parent node (namely, IAB node 1), to request to set up the connection to the second IAB donor. Optionally, IAB node 3 may further send, to the new IAB donor (namely, the second IAB donor, or specifically, the second IAB-donor-CU or the second IAB-donor-CU-CP), an RRC message that carries a request for IP address information, where the RRC message may specifically include quantity and type information (where a type may be, for example, an IPv4 address, an IPv6 address, or an IPv6 address prefix) of IP addresses for the following different purposes: transmitting an F1 interface control plane message (namely, an F1-C service), transmitting an F1 interface user plane message (namely, an F 1 -U service), transmitting a non-F 1 interface message (namely, a non-F 1 service), or transmitting all services.

It should be understood that, in this embodiment of this application, a node on which a link failure occurs is an IAB node. During actual application, a node on which a link failure occurs may alternatively be UE. The UE may serve as a relay node to provide a network connection service for another UE (which may be considered as descendent UE).

It should be understood that, in an application scenario described in this embodiment of this application, IAB node 3 that performs recovery is connected to a donor network device via parent node 1 or 2. In an actual application scenario, IAB node 3 that performs recovery may not perform connection via a parent node, but is directly connected to a cell served by a donor node (which may be specifically an IAB-donor-DU, or an IAB donor that has complete functions and that is not in a CU-DU separation deployment). This is not limited in this application.

In this embodiment of this application, the first IAB donor may also be referred to as an initial IAB donor, and the second IAB donor may also be referred to as a new IAB donor. This is not limited in this application.

IAB node 3 may be connected to the new IAB donor (namely, the second IAB donor). However, for a descendent node (including a descendent IAB node and descendent UE) of IAB node 3, the descendent IAB node or the descendent UE is not aware that IAB node 3 has been connected to the new IAB donor, and still attempts to establish a connection to the initial IAB donor (namely, the first IAB donor) via IAB node 3 while the connection to the initial IAB donor actually has been lost. As a result, the descendent node cannot continue operating normally (to be specific, the descendent node cannot perform service transmission of the descendent node, and cannot provide a transmission service for nodes connected to the descendent node, either).

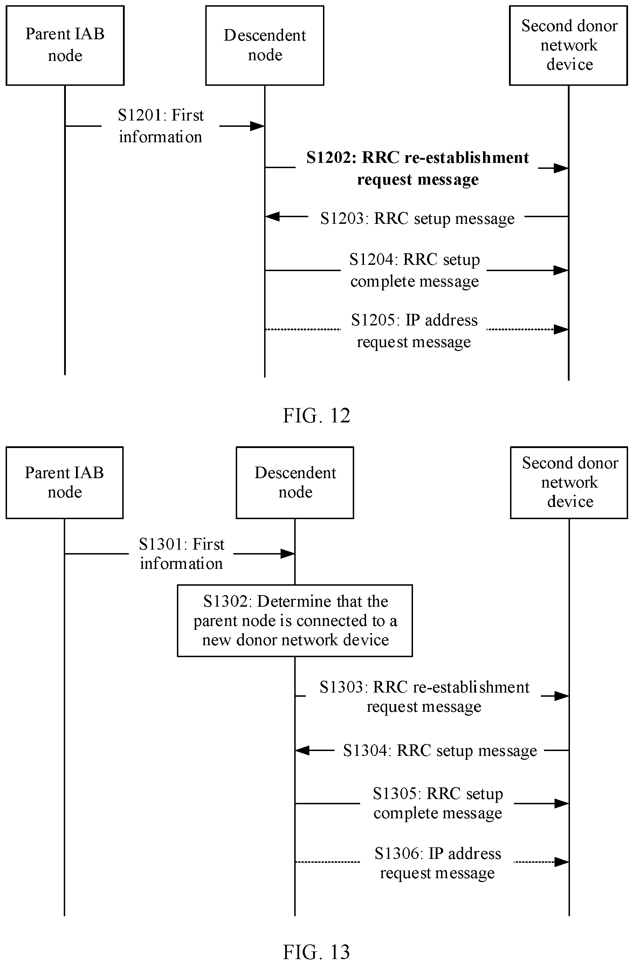

FIG. 12 is a schematic flowchart of radio link failure recovery according to an embodiment of this application. As shown in FIG. 12, the following steps are included.

S1201: After a parent IAB node (for example, IAB node 3 in FIG. 11) performs RLF recovery and successfully connects to a new IAB donor network device (which may be a second donor network device in this embodiment of this application), the parent IAB node sends first information to a descendent node (which may be a descendent IAB node or descendent UE) that accesses the parent IAB node. It should be understood that the parent IAB node was originally connected to a first donor network device before connecting to the second donor network device. The first information may be for notifying the descendent node that accesses the parent IAB node to connect, together with the parent IAB node, to the new donor network device. Specifically, the first information may indicate the descendent node that accesses the parent IAB node to send an RRC re-establishment request message via the parent IAB node. Alternatively, the first information may indicate, to the descendent node, that the parent IAB node is disconnected from the originally connected first donor network device, and is connected to the new donor network device. The first information may further indicate the descendent node to perform an RLF recovery process, where the RLF recovery process includes sending an RRC re-establishment request message.

Optionally, an RLF does not occur on the parent IAB node, and the parent IAB node proactively determines that the parent IAB node needs to disconnect from an original donor network device (which may be the first donor network device in this embodiment of this application) and connect to the new donor network device. For details, refer to the descriptions in the foregoing embodiments. This is not limited in this embodiment of this application.

S1202: The descendent node of the parent IAB node sends the RRC re-establishment request message.

In a possible manner, the descendent node may send, via a parent node (for example, the parent IAB node in FIG. 12) that successfully performs RLF recovery, the RRC re-establishment request (RRCReestablishmentRequest) message to the new donor network device connected to the parent IAB node. In this case, the descendent node sets up, together with the parent IAB node, a connection to the new donor network device (namely, a third donor network device in step S 1201).

In another possible embodiment, the descendent node may send, via a new parent node selected when performing the RLF recovery process, the RRC connection re-establishment request message to a donor network device connected to the new parent node. The new parent node may be the parent IAB node in step 1201, or may be another node. The donor network device connected to the new parent node may be the first donor network device, or may be the third donor network device, or may be another donor network device.

For ease of description, in this step, a target node, namely, the donor network device, to which the descendent node sends the RRC re-establishment request message is referred to as the second donor network device.

S 1203: The second donor network device sends an RRC re-establishment (RRCReestablishment) message or an RRC setup (RRCSetup) message to the descendent node (if the descendent node is an IAB node, the descendent node may be specifically an MT part of the IAB node), where the RRC re-establishment message or the RRC setup message includes configuration information necessary for performing RRC connection re-establishment or RRC connection setup, and is used by the descendent IAB node or the descendent UE to re-establish/set up an RRC connection to the second donor network device.

For example, if the second donor network device successfully obtains context information of the descendent node, the second donor network device sends the RRCReestablishment message to the descendent node in this step; or if the second donor network device fails to obtain context information of the descendent node, the second donor network device sends the RRCSetup message to the descendent node in this step.

The second donor network device in this step is the donor network device that receives the RRC re-establishment request message sent by the descendent node in step S1202.

S1204: The descendent IAB node or the descendent UE sends an RRC re-establishment complete (RRCReestablishmentComplete) message or an RRC setup complete (RRCSetupComplete) message to the second donor network device. Specifically, the descendent IAB node performs corresponding configuration based on the necessary configuration information in the RRC message received from the second donor network device in step S1203, and then returns the RRCReestablishmentComplete message or the RRCSetupComplete message to the second donor network device.

In this way, the descendent node of the parent IAB node may complete, based on the first information, an RRC connection re-establishment process, and re-establish or set up the RRC connection to the second donor network device. For a process in which the descendent node of the parent IAB node performs RRC connection re-establishment with the second donor network device, refer to the conventional technologies. Details are not described in this embodiment of this application.

Optionally, when the descendent node that receives the first message is an IAB node, the descendent node may further obtain an IP address from the second donor network device, that is, S1205: The descendent IAB node sends, to the second donor network device, an RRC message for requesting the IP address. Specifically, after the descendent IAB node successfully performs an RRC connection re-establishment process with the second donor network device, the descendent IAB node may send, to the new second donor network device, the RRC message for requesting the IP address.

Optionally, the descendent IAB node may include indication information in the RRCSetupComplete message in step 1204, to notify the second donor network device that the descendent IAB node is an IAB node. Then, the second donor network device may proactively send an RRC reconfiguration message to the child IAB node, where the RRC reconfiguration message carries the IP address to be allocated to the IAB node.

After the IP address is obtained again, it may be ensured that the descendent node is reachable through IP routing after connecting to a new IAB donor. This ensures subsequent service transmission.

Further, considering that the descendent node may further serve as a parent node of another node, the descendent node may also send first information to a child node or descendent UE of the descendent node. Then, the child node or the descendent UE may perform an RRC connection re-establishment process based on the first information. In this case, the descendent node may be considered as the parent IAB node in step S1201. For a specific process, refer to the foregoing steps S1201 to S1205. Details are not described herein again.

Optionally, the first information in this embodiment of this application may be sent by the parent IAB node to the child IAB node via a BAP layer control protocol data unit (protocol data unit, PDU). If the parent node is an IAB node, the parent IAB node may send the first information to the child IAB node or the descendent UE via a media access control (media access control, MAC) layer control element (control element, CE). If the parent node is UE, the parent node may send the first information to the descendent UE via an RRC message, a control plane (PCS-S) message on a direct communication link, or a MAC CE.

The indication message is sent to the descendent node of the parent IAB node that performs recovery, so that the descendent node connects, together with the parent IAB node, to the new IAB donor node or initiates the RLF recovery process, to trigger the connection re-establishment process between the descendent node and the IAB donor node. This avoids a problem that the descendent node cannot continue service data and signaling transmission because the descendent node is not aware that the parent IAB node has changed an IAB donor node. Therefore, subsequent communication is ensured.

FIG. 13 is another schematic flowchart of radio link failure recovery according to an embodiment of this application. As shown in FIG. 13, the following steps are included.

S1301: After a parent IAB node (for example, IAB node 3 in FIG. 11) performs RLF recovery and successfully connects to a new second donor network device, the parent IAB node sends a first message to a descendent node (where the descendent node may be a child node or UE, and the child node is also an IAB node) of the parent IAB node, where the first message may be for notifying the descendent node of the parent IAB node to read system information updated by the parent IAB node that performs recovery. Specifically, the first message may include a message (for example, a paging message) indicating, to the descendent node, that the system information is updated.

S1302: The descendent node reads the system information updated by the parent IAB node that performs recovery, and determines that a donor network device connected to the parent IAB node has changed. Specifically, the descendent node may determine, depending on whether a gNB ID included in a cell identifier in the system information has changed, whether the parent node is connected to an updated donor network device. Further, the system information may alternatively include length information of an identifier of the new second donor network device, and the identifier of the second donor network device is determined based on the length information. Further, the descendent node may determine that the IAB donor network device and an IAB donor network device originally connected to the parent node are different donor network devices. For a specific determining process, refer to the descriptions in the foregoing embodiments. Details are not described herein again.

S1303: The descendent node determines that the parent IAB node is connected to a new donor node, and sends an RRC re-establishment request message to the new second donor network device. For details, refer to the descriptions in S1202.

S1304, S1305, and S1306 are similar to S1203, S1204, and S1205. For specific content, refer to the descriptions in the embodiment in FIG. 12. Details are not described again in this embodiment of this application.

Optionally, the first information in this embodiment of this application may be sent by the parent IAB node to the child IAB node via a BAP layer control protocol data unit (protocol data unit, PDU). If the parent node is an IAB node, the parent IAB node may send the first message to the child IAB node or descendent UE via a media access control (media access control, MAC) layer control element (control element, CE). If the parent node is UE, the parent node may send the first message to descendent UE via an RRC message, a control plane (PCS-S) message on a direct communication link, or a MAC CE.

In this embodiment of this application, an indication message is sent to the descendent IAB node or the descendent UE of the parent node that performs recovery, so that after the parent node of the descendent IAB node or the descendent UE performs a radio link failure recovery process and connects to the new donor network device, the descendent IAB node or the descendent UE may obtain the system information updated by the IAB node that performs recovery. Compared with the embodiment in FIG. 12, in this embodiment of this application, the descendent IAB node or the descendent UE may implicitly learn that the parent node that performs recovery is connected to the new donor node, to reduce explicit indication information. In addition, the descendent IAB node or the descendent UE may trigger an RRC connection re-establishment process, to avoid a case in which the descendent node or the descendent UE cannot continue service data and signaling transmission because the descendent node or the descendent UE is not aware that the parent node has changed an IAB-donor-CU. Therefore, subsequent communication is ensured.

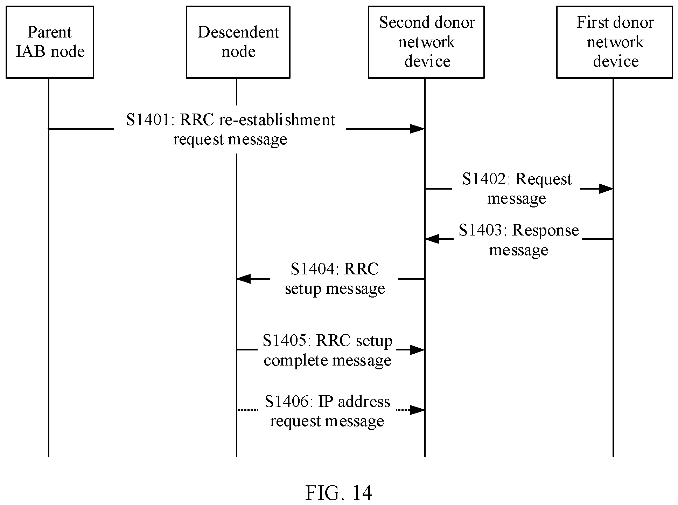

FIG. 14 is another schematic flowchart of radio link failure recovery according to an embodiment of this application.

S1401: A parent IAB node that performs recovery sends an RRC re-establishment request message to a new second donor network device. Specifically, the parent IAB node that performs recovery determines to perform an RLF recovery process, and sends the RRC re-establishment request message to the new second donor network device, where the RRC re-establishment request message may include a physical cell identifier (physical cell identifier, PCI).

Alternatively, optionally, the parent IAB node may proactively determine that the parent IAB node needs to disconnect from a first donor network device, and choose to connect to the second donor network device. For example, the parent IAB node may determine, based on a result of performing measurement, that signal quality of a currently connected cell is less than a preset threshold T1 and signal quality of another surrounding cell is greater than a preset threshold T2; or that signal quality of a currently connected cell of the parent IAB node is poorer than signal quality of another surrounding cell and a difference is greater than or equal to a preset threshold T3, and then the parent IAB node may disconnect from the currently connected cell and connect to a new cell. Signal quality of a cell may be, for example, reference signal received power (reference signal received power, RSRP) of the cell, reference signal received quality (reference signal received quality, RSRQ) of the cell, or a measured signal to interference plus noise ratio (signal to interference plus noise ratio, SINR) of the cell.

Based on the PCI identifier in the RRC message, the second donor network device may determine, based on identifiers of surrounding base stations maintained by the second donor network device and a list of cells served by these base stations, a donor network device to which the parent IAB node is connected before the parent IAB node performs recovery or from which the parent IAB node disconnects. Optionally, after sending the RRC re-establishment request message, the IAB node may further send, to the second donor network device, a message for requesting to obtain an IP address.

S1402: The second donor network device sends a request message to the first donor network device, to request to obtain a topology relationship between the parent IAB node and a descendent node (which may include a descendent IAB node or descendent UE) of the parent IAB node.

Specifically, the second donor network device determines, based on the PCI identifier in the received RRC re-establishment request message, the first donor network device to which the parent IAB node previously sets up a connection, and sends the request message to the first donor network device, to request to obtain the topology relationship between the parent IAB node and the descendent node of the parent IAB node. Optionally, the request message sent by the second donor network device may alternatively be for requesting to obtain context information related to the parent IAB node, and the context information may include the foregoing topology relationship.

S1403: The first donor network device sends a response message to the second donor network device, where the response message includes the topology relationship between the parent IAB node that performs recovery and the descendent node of the parent IAB node.

It should be understood that, in this embodiment of this application, before sending the RRC re-establishment request message to the second donor network device, the parent IAB node may set up the connection to the first donor network device. Therefore, the first donor network device may store the context information of the parent IAB node, where the context information includes the topology relationship between the parent IAB node and the descendent node.

S1404: The second donor network device sends an RRC setup (RRC Setup) message, or optionally, an RRC re-establishment (RRC re-establishment) message, to the descendent node, where the RRC re-establishment message or the RRC setup message includes configuration information for the descendent node, and the configuration information is for setting up an RRC connection between the descendent node and the second donor network device.

S1405: The descendent node sends an RRC setup complete message, to notify that RRC re-establishment is completed, where the message may be the RRC setup Complete message.

Further, when the descendent device is an IAB node: S1406: The second donor network device may further send, to the descendent node in a downlink RRC message, an IP address allocated to the descendent node. Specifically, the IP address may be in the RRC Re-establishment/setup message, or in a subsequent RRC reconfiguration message that is after the RRC re-establishment is completed.

Alternatively, optionally, the second donor network device may further obtain context information of the parent IAB node and the descendent node from only the first donor network device. The context information may include, for example, a quantity and a type (where the type may be, for example, an IPv4 address, an IPv6 address, or an IPv6 address prefix) of IP addresses used by the descendent node for all services, an F1-C service, an F1-U service, or a Non-F1 service. Based on the obtained context information, the second donor device may learn of information (including the quantity, the type, and the like) about the IP addresses required by the descendent node for transmitting services of different types, and then allocate the IP address to the descendent node in the manner described above.

It should be understood that the parent node in this embodiment of this application may alternatively be UE. In this case, the first donor network device and the second donor network device may be base stations. Similarly, the UE may also send an RRC re-establishment request message to the second donor network device. Then, the second donor network device may set up a connection to descendent UE of the UE based on the descriptions in the foregoing steps.

In this embodiment of this application, the second donor network device proactively obtains the topology relationship of the descendent IAB node or the descendent UE of the parent IAB node that performs recovery, so that the second donor network device may proactively perform a reconnection process with the descendent IAB node or the descendent UE. This may avoid a case in which the descendent IAB node or the descendent UE cannot continue service data and signaling transmission because the descendent IAB node or the descendent UE is not aware that the parent node has changed a donor network device. Therefore, subsequent normal communication is ensured. In addition, compared with the embodiments of this application in FIG. 12 and FIG. 13, in this embodiment of this application, the descendent node or the descendent UE is not required to be proactively aware, so that a recovery process can be faster, and notification signaling between a node that performs recovery and a child node and UE can be reduced.

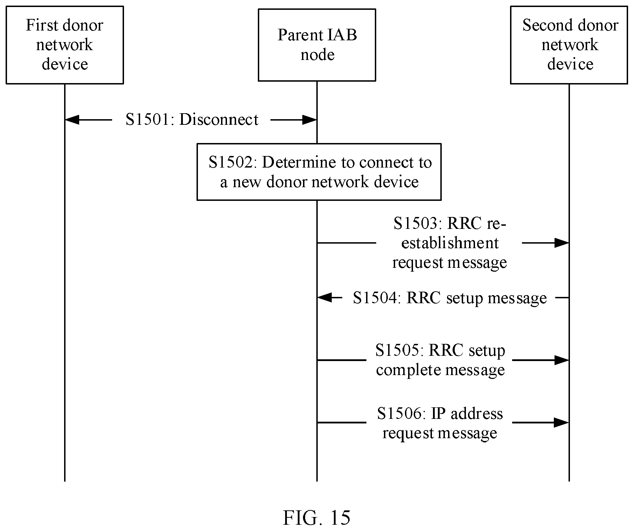

It should be understood that, before the second donor network device sends a message to the descendent IAB node or the descendent UE and re-establishes a connection to the descendent IAB node or the descendent UE, the second donor network device has completed a re-establishment process with the parent IAB node that performs recovery, and has set up an F1 interface with the parent IAB node. FIG. 15 is a schematic flowchart in which an IAB node performs RLF recovery and connects to a second donor network device according to an embodiment of this application. As shown in FIG. 15, the following steps are included.

S 1501: A parent IAB node disconnects from a first donor network device when, optionally, an RLF may occur between the IAB node and the first donor network device; or when the parent IAB node determines, based on cell communication quality, to disconnect from the first donor network device. For a specific determining process, refer to the descriptions in the foregoing embodiments.

S 1502: The parent IAB node determines that the newly accessed second donor network device and the first donor network device are different donor network devices. Specifically, the parent IAB node may determine, based on a part (for example, a gNB identifier) that is in an identifier of the newly accessed cell and that belongs to the donor network device, that the accessed second donor network device is a network device different from the first donor network device.

It should be understood that a cell identifier (for example, an NCI of a cell) includes an identifier of a base station gNB, and different IAB donor network devices correspond to different gNB identifiers. Therefore, after obtaining system information of a to-be-accessed cell, the parent IAB node may determine, based on a gNB identifier that is in an identifier of an accessed cell and that is carried in the system information, whether the parent IAB node is connected to a new donor network device after performing RLF recovery. Optionally, the system information of the cell to be accessed by the parent IAB node may further include length information of a gNB ID, to determine that the second donor network device is a different device. Specifically, the system information of the cell may include a cell identifier NCI whose length is X bits, where the first Y^{th} bits are an identifier of the second donor network device, X>Y, and X is usually a fixed value. If the parent IAB node is aware of length information Y, the parent IAB node may learn that the first Y^{th} bits in the NCI are the identifier of the second donor network device, and then the parent IAB node may further determine that the second donor network device and the first donor network device are different network devices based on an identifier of the previously connected first donor network device.

S1503: The parent IAB node sends an RRC re-establishment request message to the new second donor network device.

S1504: The second donor network device sends an RRC setup message to the parent IAB node.

S1505: The parent IAB node sends an RRC setup complete message to the second donor network device, to complete connection re-establishment with the second donor network device.

S1506: The parent IAB node sends a message for requesting to obtain an IP address to the second donor network device. The message may include quantity and type information (where a type may be, for example, an IPv4 address, an IPv6 address, or an IPv6 address prefix) of IP addresses for the following different purposes: transmitting an F1 interface control plane message (namely, an F1-C service), transmitting an F1 interface user plane message (namely, an F1-U service), transmitting a non-F 1 interface message (namely, a non-F 1 service), or transmitting all services.

It is determined, based on the identifier of the newly accessed cell, that an accessed IAB donor network device is a donor network device different from the first donor network device, so that the IP address may be requested to be obtained from the new IAB donor network device, to ensure subsequent service transmission.

Further, after performing an RRC connection re-establishment process, the parent IAB node or a descendent IAB node in this embodiment of this application may be connected to a new donor network device (which may be specifically a CU part or a CU-CP part of the donor network device). Considering that an IAB node includes an MT part and a DU part, how to process an F1 connection of the DU part of the IAB node after the IAB-MT part sets up/re-establishes an RRC connection to a new donor network device is not described in the conventional technologies. A most direct processing method is that the IAB-DU part initiates an F1 connection setup process to the new donor network device. However, in this case, context information of an F1 interface (including a user plane and a control plane) that is between the IAB-DU and an old donor network device and that is originally maintained by the IAB-DU is released, and then context information is gradually set up after an F1 interface is set up between the IAB-DU and the new donor network device. Considering that the IAB node may have a plurality of child nodes and UEs, a process of setting up context (Context) information of MTs and UE of these child nodes on the F1 interface between the IAB-DU and the new donor network device involves a large quantity of signaling overheads, and a long delay is introduced. Therefore, in this manner, a signaling storm on the F1 interface may be caused, and a service transmission delay of the child node/UE is increased.

An embodiment of this application further provides an F1 interface re-establishment method, to reduce signaling overheads on an F1 interface when an MT part of an IAB node is re-established with a new donor network device, and reduce impact on an interruption delay of a service of descendent UE and a descendent IAB node.

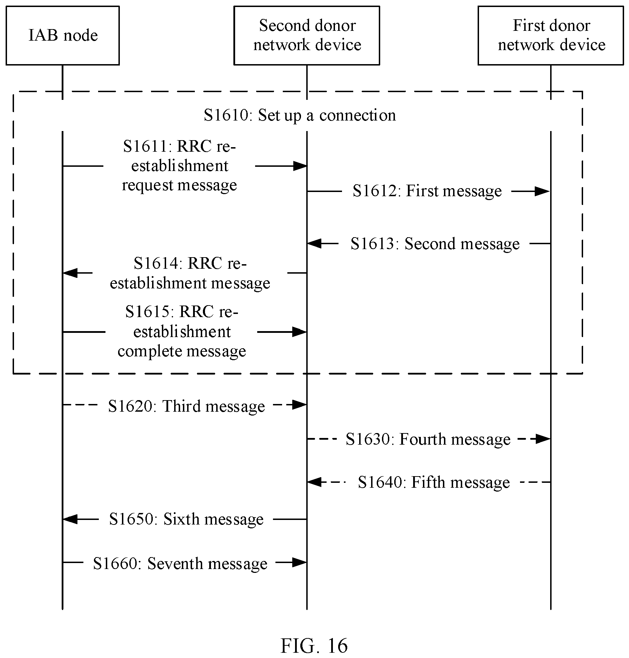

FIG. 16 is a schematic flowchart of F1 interface re-establishment according to an embodiment of this application. As shown in FIG. 16, the following steps are included.

S1610: An IAB node (which may be a first communication device or a second communication device in embodiments of this application) sets up a connection to a second donor network device.

In an implementation, the IAB node sets up a connection to the second donor network device in a handover process. Specifically, in step S1610, the IAB node may send an RRC reconfiguration complete (RRCReconfigurationComplete) message to the second donor network device in the handover process. The IAB node was connected to a first donor network device before handover, and is connected to the second donor network device after handover. In other words, the first donor network device is a source donor network device, and the second donor network device is a target donor network device.

In another implementation, the IAB node performs RRC connection re-establishment with the second donor network device. Before the IAB node initiates an RRC re-establishment process, the IAB node was connected to a first donor network device. The first donor network device is different from the second donor network device. That is, the first donor network device is an old donor network device connected to the IAB node before a network topology is updated, where the first donor network device is referred to as a source donor network device. The second donor network device is a new donor network device connected to the IAB node after the network topology is updated, where the second donor network device is referred to as a target donor network device. The IAB node in this step may specifically refer to an MT part of the IAB node.

Specifically, the RRC connection re-establishment process in this step may include the following steps.

S1611: The IAB node sends an RRC re-establishment request message to the second donor network device.

S1612: The second donor network device sends a first message to the first donor network device, where the first message may be specifically a UE context retrieve request (UE context retrieve request) message, and includes information carried by the IAB node in the RRC re-establishment request, including, for example, an identifier of the MT part of the IAB node (for example, a cell radio network temporary identifier (cell radio network temporary identifier, C-RNTI) of a cell accessed by the MT part before RRC recovery), a parameter ShortMAC-I used by the IAB node for integrity check, an identifier of a cell accessed by the IAB node before RRC recovery, or the like. This step is mainly for requesting to obtain context (a context of the IAB-MT) information of the IAB node by the second donor network device from the first donor network device.

S1613: The first donor network device sends a second message to the second donor network device.

The second message may be specifically UE context retrieve response message carrying the context information of the IAB node. The first donor network device searches for a context of the IAB node, and verifies the IAB node. If the first donor network device successfully finds context information of the MT part of the IAB node and the verification succeeds, the first donor network device sends, to the second donor network device, a message carrying the context of the MT part of the IAB node.

S1614: If the second donor network device successfully obtains the context of the IAB node, the second donor network device sends an RRC re-establishment (RRCReestablishment) message to the IAB node.

S1615: The IAB node returns, to the second donor network device, an RRC re-establishment complete (RRCReestablishmentComplete) message indicating success of the RRC connection re-establishment process.

After the MT part of the IAB node performs RRC re-establishment with the second donor network device, a DU part of the IAB node may set up an F1 interface with the second donor network device.

Specifically, S1620: The IAB node (which may be specifically the DU part of the IAB node) sends a third message to the second donor network device, to request to re-establish the F1 interface. The third message may be specifically an F1 re-establishment request message.

The third message may carry the following content: an identifier of the IAB node and/or an identifier of the first donor network device. The identifier of the IAB node may be specifically a gNB-DU ID of the DU part of the IAB node, a name of the DU part of the IAB node, an IP address of the DU part of the IAB node, a BAP layer identifier (BAP address) of the IAB node, or the like. The identifier of the first donor network device may be specifically an IP address of the first donor network device, a gNB ID corresponding to the first donor network device, a name of a CU of the first donor network device, or the like.

Optionally, the MT part of the IAB node may send indication information to the DU part of the IAB node, to indicate the DU part of the IAB node to initiate an F 1 re-establishment process.

Step S 1620 is an optional step, and may not be performed. In this case, after learning that the IAB node is an IAB node and obtaining context information of the DU part of the IAB node, the second donor network device may proactively trigger F1 connection re-establishment in step S1650, and send a sixth message to the IAB node.

It should be noted that before step S1620, the second donor network device may send necessary adaptation layer default configuration information to the IAB node via an RRC message, where the necessary adaptation layer default configuration information may include any one or more of the following information: a BAP address allocated by the second donor network device to the IAB node, a default (default) BAP routing ID, and a default backhaul RLC channel (BH RLC channel) identifier. The adaptation layer default configuration information is for transmitting an uplink data packet (including various types of SCTP layer data packets such as a data packet for stream control transmission protocol (stream control transmission protocol, SCTP) association establishment or a heartbeat packet, various types of data packets for IPsec negotiation, an F1AP layer data packet, a user plane data packet, or the like) before the F1 interface is successfully re-established. The default backhaul RLC channel is an RLC channel between the IAB node and a newly connected parent node.

S1630: The second donor network device sends a fourth message to the first donor network device, to request to obtain the context information of the DU part of the IAB node.

The fourth message may include the identifier of the IAB node, for example, the gNB-DU ID of the DU part of the IAB node, the name of the DU part of the IAB node, the IP address of the DU part of the IAB node, the BAP layer identifier (BAP address) of the IAB node, or the identifier of the MT part of the IAB node (for example, the C-RNTI of the cell accessed by the MT part before RRC recovery).

This step is optional, and may be performed together with step S1612. That is, step S1630 does not need to be performed individually. Instead, the F1 context retrieve request is implicitly included in step S1612 for execution. In this case, optionally, the gNB-DU ID of the DU part of the IAB node, the IP address of the DU part of the IAB node, the BAP layer identifier (BAP address) of the IAB node, or the like may be additionally included in step S1612.

S1640: The first donor network device sends a fifth message to the second donor network device.

In a possible implementation, the first donor network device successfully finds the context information of the DU part of the IAB node, and includes the context information of the DU part of the IAB node in the fifth message

Specifically, the fifth message may include at least one of the following content: the identifier of the IAB node (for details, refer to the example in the previous step), context information of an F 1 interface of the IAB node, and context information of a transport layer of the IAB node.

The context information of the transport layer of the IAB node may include at least one of the following information: a quantity of SCTP associations (SCTP associations) available for carrying an FlAP message on an F1 interface between the IAB node and the first donor network device; a quantity of streams in each SCTP association; a mapping relationship between a non-UE associated (non-UE associated) F 1 AP connection/message, an SCTP association, and a stream identifier; or a mapping relationship between UE associated (UE associated) F1 AP connections/messages, SCTP associations, and stream identifiers for different UE, where a UE associated F1 AP connection/message of each UE may be identified by an identifier of the UE (for example, an F1AP identifier allocated by the IAB node or the first donor network device to the UE).

The context information of the F1 interface of the IAB node may include at least one of the following: configuration information of the DU of the IAB node, configuration information of the first donor network device, and context information of a descendent node served by the IAB node. The descendent node served by the IAB node may be another IAB node or UE that accesses a cell served by the IAB node.

Optionally, in this embodiment of this application, the configuration information of the DU of the IAB node includes but is not limited to configuration information of a cell served by the DU of the IAB node.

The configuration information of the cell served by the DU of the IAB node may include one or more of the following: NR cell global identifier (cell global identifier, CGI) of the cell; NR physical cell identifier (physical-layer cell identities, PCI) of the cell; a tracking area code (tracking area code, TAC) of the cell; a serving public land mobile network (public land mobile network, PLMN) identifier; a supported slice (slice) identifier; a frequency and transmission bandwidth supported by the cell; a measurement timing configuration (measurement timing configuration, MTC); radio access network area code (RAN area code, RANAC) to which the cell belongs; a transmission direction supported by the cell, where the transmission direction means that only downlink transmission is supported, or only uplink transmission is supported, or both uplink transmission and downlink transmission are supported; system information of the DU of the IAB node; an activation status of the cell; a duplex mode of the IAB node; an STC configuration of the cell; a resource configuration of the cell; or the like. The activation status of the cell includes two modes: activated (activated) mode and deactivated (deactivated) mode. A cell in activated mode can normally send information such as a reference signal and system information broadcast, to provide an access service for a terminal. A cell in deactivated mode cannot send information such as a reference signal and system information broadcast, and cannot provide an access service for a terminal. The duplex mode of the IAB node means whether the DU part and the MT part of the IAB node can be in sending mode at the same time, or in receiving mode at the same time, or one of the DU part and the MT part is in sending mode and the other in receiving mode.

Optionally, in this embodiment of this application, the configuration information of the first donor network device may include but is not limited to the identifier of the first donor network device, a name of the first donor network device, system information of the first donor network device, an RRC version of the first donor network device, and the like. The identifier of the first donor network device may be the IP address of the first donor network device, the gNB ID corresponding to the first donor network device, or the like.

Optionally, the context information of the descendent node may include, for example, one or more of the following content: a C-RNTI of the descendent node, special cell (special cell, SpCell) information of the descendent node, secondary cell (secondary cell, SCell) information of the descendent node, data radio bearer (data radio bearer, DRB) information of the descendent node, GPRS tunneling protocol user plane (GPRS tunneling protocol user plane, GTP-U) information set up by a DRB corresponding to the descendent node on an F1 interface user plane, signaling radio bearer (signaling radio bearer, SRB) information of the descendent node, backhaul RLC channel (backhaul RLC channel) information of the descendent node, an FlAP identifier allocated by the IAB node to the descendent node, an F1AP identifier allocated by the first donor network device to the descendent node, a BAP layer identifier (BAP address) allocated by the first donor network device to the descendent node, and the like.

For example, the DRB information of the descendent node may include information such as a DRB identifier, a slice identifier, a quality of service (quality of service, QoS) parameter, an RLC mode, and a PDCP sequence number (sequence number, SN) length. The GTP-U tunneling information set up by the DRB corresponding to the descendent node on the F1 interface user plane may include downlink endpoint information and/or uplink endpoint information of a GTP-U tunnel user plane, and may further include backhaul information corresponding to the GTP-U tunnel user plane. The downlink endpoint information is a GTP-U tunnel endpoint identifier (tunnel endpoint identifier, TEID) allocated by the IAB node and a transport layer address (an IP address) of the IAB node. The uplink endpoint information is a GTP-U TEID allocated by the first donor network device and a transport layer address (an IP address) of the first donor network device. The backhaul information includes a BAP layer routing identifier (BAP routing ID) and/or at least one piece of egress BH RLC channel information, where each piece of egress BH RLC channel information includes a next-hop node identifier (a BAP address of a next-hop node) corresponding to an egress link and an egress BH RLC channel identifier The backhaul RLC channel (backhaul RLC channel) information of the descendent node may include any one or more of the following: a BH RLC channel identifier, a QoS parameter, an RLC mode, whether a BH RLC channel is for transmitting a BAP layer control PDU, service mapping information corresponding to the BH RLC channel, and the like. The service mapping information corresponding to the BH RLC channel may include an ingress BH RLC channel ID and an identifier of a previous-hop node (a BAP address of the previous-hop node) corresponding to an ingress link that are mapped to the BH RLC channel in a downlink bearer mapping relationship; and/or an identifier of a next-hop node (a BAP address of the next-hop node) corresponding to an egress link and an egress BH RLC channel identifier that are mapped to the BH RLC channel in an uplink bearer mapping relationship.

In another possible implementation, the first donor network device notifies, via the fifth message, the second donor network device that the context information of the DU part of the IAB node fails to be obtained. For example, if the first donor network device fails to find the context information of the DU part of the IAB node, or the verification on the IAB node fails, the first donor network device may feed back, to the second donor network device, an indication indicating that the context information of the DU part of the IAB node fails to be obtained. Optionally, in this case, the fifth message may further carry a failure cause value and a message indicating the IAB node to perform RRC connection release.

In an embodiment, step S1640 is an optional step, and may not be performed individually. Instead, content in the fifth message is carried in the second message and sent to the second donor network device by the first donor network device in step S1613. In a possible manner, the first donor network device searches for the context information of the IAB node in step S1613, and may learn that the IAB node is an IAB node. In this case, the first donor network device may directly send the context information of the DU part of the first communication device and the context information of the MT part to the second donor network device in the second message. In another possible manner, the first donor network device searches for the context information of the IAB node in step S1613, and may learn that the IAB node is an IAB node, but fails to find the context information of the DU part of the IAB node. In this case, the first donor network device may directly notify, via the second message, the second donor network device that the context information of the DU part of the IAB node fails to be obtained.

S1650: The second donor network device sends the sixth message to the IAB node.

In an implementation, in step S1640, if the first donor network device notifies, via the fifth message, the second donor network device that the context information of the DU part of the IAB node fails to be obtained, the sixth message may indicate the IAB node to perform an F1 interface setup process.

In another possible implementation, in step S1640, if the first donor network device successfully finds the context information of the DU part of the IAB node, and the fifth message includes the context information of the DU part of the IAB node, the sixth message may indicate the IAB node to perform an F1 interface re-establishment process.

The sixth message may include updated F1 interface configuration information. The updated F1 interface configuration may be determined by the second donor network device, and is for updating a context of an F 1 interface maintained by the DU part of the IAB node.

The updated F1 interface configuration may specifically include one or more of the following content: configuration information of the DU of the IAB node that needs to be updated, configuration information of the second donor network device, and context information of a descendent node served by the IAB node that needs to be updated. The descendent node served by the IAB node may be another IAB node or UE that accesses a cell served by the IAB node.

For specific content of the configuration information of the DU of the IAB node that needs to be updated, refer to the descriptions of the configuration information of the DU of the IAB node in step S1650. In addition, the configuration information of the DU of the IAB node that needs to be updated may further include a list of cells that are served by the DU and that need to be activated, a list of cells that are of the DU and that need to be deactivated, and the like. For content of the configuration information of the second donor network device, refer to the configuration information of the first donor network device in step S1650, where the first donor network device may be replaced with the second donor network device. For specific content of the context information of the descendent node served by the IAB node that needs to be updated, refer to sub-items included in the context information of the descendent node served by the IAB node in step S1650, where the first donor network device is replaced with the second donor network device. In addition, each of the following items that need to be updated may include specific item information that needs to be added, specific item information that needs to be deleted, or specific item information that needs to be modified: secondary cell SCell information of the descendent node, DRB information of the descendent node, GTP-U information set up by a DRB corresponding to the descendent node on an F1 interface user plane, SRB information of the descendent node, and backhaul RLC channel information of the descendent node.

S1660: The IAB node sends a seventh message to the second donor network device.

In an implementation, if the sixth message in step S1650 indicates the IAB node to perform the F1 interface setup process, the seventh message is an F 1 setup request (F 1 Setup Request) message sent by the IAB node, and is for requesting the second donor network device to set up an F1 interface. It should be noted that, for a process in which the IAB node sends the F 1 setup request message to the second donor network device and performs F1 interface setup, refer to the conventional technologies. A subsequent process may further include: The second donor network device sends an F 1 setup response (F 1 Setup Response) message or an F 1 setup failure (F 1 Setup Failure) message to the IAB node. Details are not described herein.

In another implementation, if the sixth message in step S1650 indicates the IAB node to perform the F1 interface re-establishment process, and F1 re-establishment performed by the IAB node succeeds, the seventh message may indicate that the F1 re-establishment is completed.

If the sixth message in step S1650 indicates the IAB node to perform the F1 interface re-establishment process, after the IAB node receives the sixth message in step S1650, the IAB node updates the context information of the F1 interface based on content in the sixth message, and then sends the seventh message to the second donor network device. If only a part of the configuration information provided in the sixth message is successfully configured by the IAB node, the IAB node may further include, in the seventh message, information indicating successfully configured configuration content and/or configuration content that fails to be configured.

In still another implementation, if the sixth message in step S1650 indicates the IAB node to perform the F1 interface re-establishment process, and F1 re-establishment performed by the IAB node fails, the seventh message may indicate that the F1 re-establishment fails.

In this embodiment of this application, the second donor network device obtains F1 interface context information of the IAB node and the first donor network device from the first donor network device, so that the second donor network device can re-establish an F1 interface with the IAB node based on the obtained context information after the IAB node is connected to the second donor network device. This reduces F 1 interface signaling overheads and reduces impact on a service interruption delay of descendent UE and a descendent IAB node.

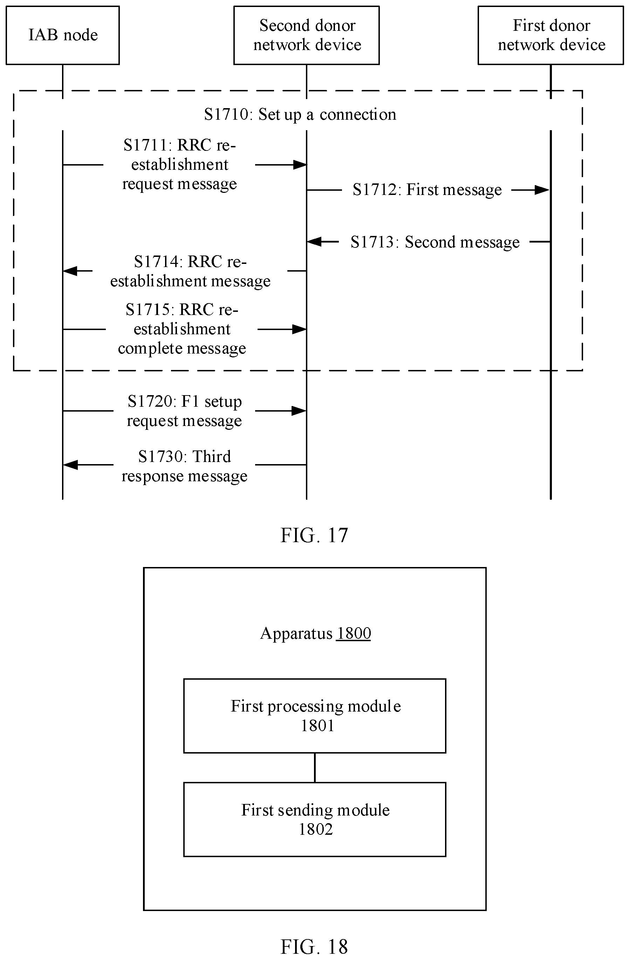

FIG. 17 is another schematic flowchart of F1 interface re-establishment according to an embodiment of this application. Different from the embodiment of this application in FIG. 16, in this embodiment of this application, a second donor network device fails to obtain context information of an IAB node from a first donor network device.

S1711 and S1712 are the same as S1611 and S 1612. S1713: The first donor network device sends a second message to the second donor network device. Specifically, the second donor network device fails to obtain a context of the IAB node (for example, the second donor network device fails to find the correct first donor network device; or the first donor network device fails to find the context of the IAB node; or verification performed by the first donor network device on the IAB node fails, and the first donor network device feeds back a UE context retrieve failure message to the second donor network device), and the first donor network device sends a context retrieve failure message to the second donor network device.

S1714: The second donor network device sends an RRC setup (RRC Setup) message to the IAB node, that is, falls back to an RRC connection setup process.

S1715: The IAB node returns an RRC setup complete (RRC SetupComplete) message to the second donor network device. In this case, RRC connection re-establishment of the IAB node falls back to the RRC setup process which succeeds.

Similar to the embodiment of this application in FIG. 16, in this embodiment of this application, after an MT part of the IAB node performs an RRC connection re-establishment process with the second donor network device, a DU part of the IAB node may set up an F1 interface with the second donor network device.

S1720: The IAB node sends an F1 setup request message to the second donor network device, and starts an F 1 connection setup process with the second donor network device.

S1730: The second donor network device returns a third response message to the IAB node.

In an implementation, the third response message is an F1 setup response message. In this way, the F1 interface is set up between the DU part of the IAB node and the second donor network device.

In another implementation, the third response message is an F1 setup failure message. Currently, the second donor network device cannot set up the F1 interface with the IAB node.

For a specific process of setting up the F1 interface, refer to the conventional technologies. Details are not described herein in this embodiment of this application.

In this embodiment of this application, after the IAB node completes RRC re-establishment with a new donor network device, setup of an F1 interface between the IAB node and the new donor network device is completed. Therefore, subsequent communication is ensured.

FIG. 18 is a schematic diagram of a communication apparatus according to an embodiment of this application. As shown in FIG. 18, the apparatus includes a first processing module 1801 and a first sending module 1802. The apparatus 1800 may be configured to implement functions of receiving, processing, and sending a message by the first communication device in any one of the foregoing method embodiments. For example, the apparatus 1800 may be a first communication device, an IAB node, or UE. In an implementation of the apparatus 1800, the apparatus 1800 includes a unit configured to implement any step or operation in the foregoing method embodiments. The unit may be implemented by hardware, may be implemented by software, or may be implemented by a combination of hardware and software.

The apparatus 1800 may serve as the first communication device, the IAB node, or the UE to process a message, and perform a step, performed by the first communication device, the IAB node, or the UE in the foregoing method embodiments, of processing a request message of a second communication device. The first sending module 1802 may be configured to support the apparatus 1800 in performing communication, for example, performing a sending/receiving action performed by the first communication device, the IAB node, or the UE in FIG. 6 to FIG. 10. The processing module 1801 may be configured to support the apparatus 1800 in performing a processing action in the foregoing methods, for example, performing a processing action performed by the first communication device, the IAB node, or the UE in FIG. 6 to FIG. 10. Optionally, the apparatus 1800 may further include a first receiving module, configured to receive indication information of a second donor network device. Specifically, refer to the following descriptions.

The first processing module is configured to: when a radio link failure RLF occurs on the communication apparatus connected to a first donor network device, perform an RLF recovery process, and connect to the second donor network device. The first processing module is further configured to determine that the first donor network device and the second donor network device are different network devices. The first sending module is configured to send first information to the second communication device, where the first information indicates the second communication device to send a radio resource control RRC re-establishment request message, or indicates the second communication device to receive system information from the communication apparatus, and the second communication device is a device that communicates with the first donor network device via the communication apparatus.

Optionally, the system information includes an identifier of the second donor network device and/or length information of the identifier of the second donor network device.

Optionally, the first processing module is specifically configured to: determine, based on an identifier of a newly accessed cell, that the accessed second donor network device is a network device different from the first donor network device.

Optionally, the apparatus further includes: the first receiving module, configured to receive second information sent by the second donor network device, where the second information indicates that the second donor network device and the first donor network device are different network devices.

Optionally, the second communication device is a first network device. The first processing module is further configured to: indicate, based on the first information, the second communication device to send an IP address request message. Alternatively, the first sending module is further configured to: send indication information to the second communication device, where the indication information indicates the second communication device to send an IP address request message.

Optionally, the communication apparatus sends the first information via a backhaul adaptation protocol BAP layer control protocol data unit PDU or a media access control MAC layer control element.

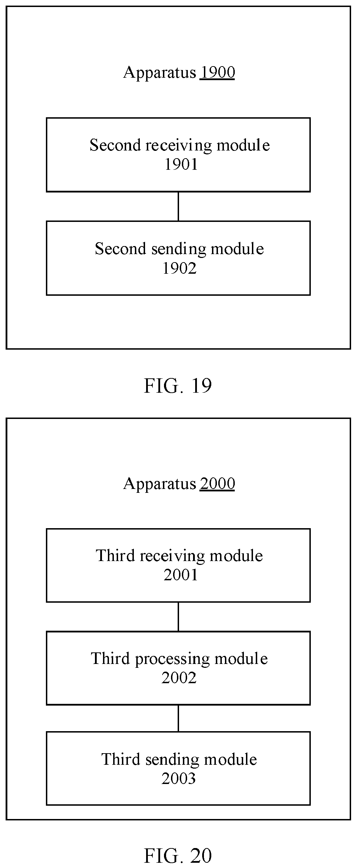

FIG. 19 is a schematic diagram of another communication apparatus according to an embodiment of this application. As shown in FIG. 19, the apparatus includes a second receiving module 1901 and a second sending module 1902. The apparatus 1900 may be configured to implement functions of receiving, processing, and sending a message by the second communication device in any one of the foregoing method embodiments. For example, the apparatus 1900 may be a second communication device, a descendent IAB node, or descendent UE. In an implementation of the apparatus 1900, the apparatus 1900 includes a unit configured to implement any step or operation in the foregoing method embodiments. The unit may be implemented by hardware, may be implemented by software, or may be implemented by a combination of hardware and software.

The apparatus 1900 may serve as the second communication device, the descendent IAB node, or the descendent UE to process a message, and perform a step, performed by the second communication device, the descendent IAB node, or the descendent UE in the foregoing method embodiments, of processing system information. The second receiving module 1901 and the second sending module 1902 may be configured to support the apparatus 1900 in performing communication, for example, performing a sending/receiving action performed by the second communication device, the descendent IAB node, or the descendent UE in FIG. 6 to FIG. 10. Optionally, the apparatus 1900 may further include a second processing module, configured to determine that a connected donor network device is a new donor network device. Specifically, refer to the following descriptions.

The second receiving module is configured to receive first information from a first communication device, where the first information indicates the communication apparatus to send a radio resource control RRC re-establishment request message, or indicates the communication apparatus to receive system information from the first communication device, and the communication apparatus is a device that communicates with a first donor network device via the first communication device. The second sending module is configured to send the radio resource control RRC re-establishment request message based on the first information.

Optionally, the second sending module is further configured to: receive the system information from the first communication device based on the first information. The apparatus further includes: the second processing module, configured to determine that a second donor network device and the first donor network device are different network devices. The second sending module is further configured to send the RRC re-establishment request message to the first communication device.

Optionally, the updated system information further includes length information of an identifier of the second donor network device.

Optionally, the apparatus is a first network device, and the second sending module is further configured to: send an IP address request message based on the first information; or receive indication information from the first communication device, where the indication information indicates the communication apparatus to send an IP address request message.

FIG. 20 is a schematic diagram of another communication apparatus according to an embodiment of this application. As shown in FIG. 20, the apparatus includes a third receiving module 2001, a third processing module 2002, and a third sending module 2003. The apparatus 2000 may be configured to implement functions of receiving, processing, and sending a message by the second donor network device in any one of the foregoing method embodiments. For example, the apparatus 2000 may be a second donor network device or an access network element. The network element or network function may be a network element in a hardware device, may be a software function running on dedicated hardware, or may be a virtualized function instantiated on a platform (for example, a cloud platform). In an implementation of the apparatus 2000, the apparatus 2000 includes a unit configured to implement any step or operation in the foregoing method embodiments. The unit may be implemented by hardware, may be implemented by software, or may be implemented by a combination of hardware and software.

The apparatus 2000 may serve as the second donor network device or the access network element to process a message, and perform a step, performed by the second donor network device or the access network element in the foregoing method embodiments, of processing an RRC re-establishment request message. The third receiving module 2001 and the third sending module 2003 may be configured to support the apparatus 2000 in performing communication, for example, performing a sending/receiving action performed by the second donor network device or the access network element in FIG. 6 to FIG. 10. The processing module 2002 may be configured to support the apparatus 2000 in performing a processing action in the foregoing methods, for example, performing a processing action performed by the second donor network device or the access network element in FIG. 6 to FIG. 10. Specifically, refer to the following descriptions.

The third receiving module is configured to receive the radio resource control RRC re-establishment request message from a first communication device. The third processing module is configured to determine a first donor network device based on the RRC re-establishment request message. The third sending module is configured to send request information to the first donor network device, where the request information is for requesting context information of the first communication device, the context information includes a topology relationship between the first communication device and a second communication device, and the second communication device is a device that communicates with the first donor network device via the first communication device. The third receiving module is further configured to receive the context information from the first donor network device. The third processing module is further configured to set up a connection to the second communication device based on the topology relationship.

Optionally, the second communication device is a first network device, and the second processing module is further configured to: allocate an IP address to the second communication device based on the topology relationship.

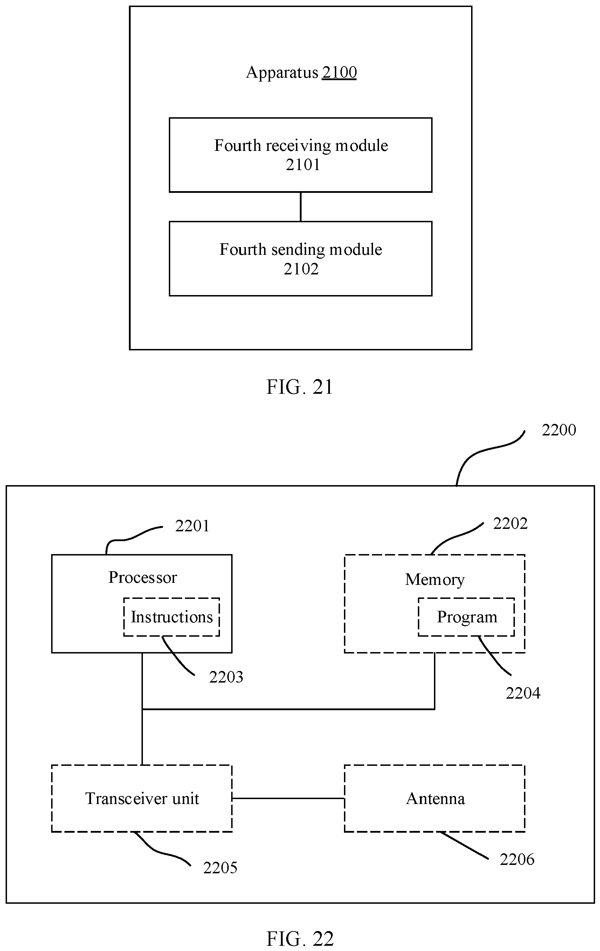

FIG. 21 is a schematic diagram of another communication apparatus according to an embodiment of this application. As shown in FIG. 21, the apparatus includes a fourth receiving module 2101 and a fourth sending module 2102. The apparatus 2100 may be configured to implement functions of receiving, processing, and sending a message by the first donor network device in any one of the foregoing method embodiments. For example, the apparatus 2100 may be a first donor network device or an access network element. The network element or network function may be a network element in a hardware device, may be a software function running on dedicated hardware, or may be a virtualized function instantiated on a platform (for example, a cloud platform). In an implementation of the apparatus 2100, the apparatus 2100 includes a unit configured to implement any step or operation in the foregoing method embodiments. The unit may be implemented by hardware, may be implemented by software, or may be implemented by a combination of hardware and software.

The apparatus 2100 may serve as the first donor network device or the access network element to process a message, and perform a step, performed by the first donor network device or the access network element in the foregoing method embodiments, of processing a request message of a second donor network device. The fourth receiving module 2101 and the fourth sending module 2102 may be configured to support the apparatus 2100 in performing communication, for example, performing a sending/receiving action performed by the first donor network device or the access network element in FIG. 6 to FIG. 10. Specifically, refer to the following descriptions.

The fourth receiving module is configured to receive the request information from the second donor network device, where the request information is for obtaining context information of a first communication device, the context information includes a topology relationship between the first communication device and a second communication device, and the second communication device is a device that communicates with the communication apparatus via the first communication device. The fourth sending module is configured to send the context information to the second donor network device.

FIG. 22 is another schematic diagram of a structure of a communication apparatus according to an embodiment of this application. The communication apparatus 2200 may be configured to implement the method related to the first relay device described in the foregoing method embodiments. The communication apparatus 2200 may be a chip.

The communication apparatus 2200 includes one or more processors 2201. The one or more processors 2201 may support the communication apparatus 2200 in implementing the communication methods in FIG. 6 to FIG. 10. The processor 2201 may be a general-purpose processor or a dedicated processor. For example, the processor 2201 may be a central processing unit (central processing unit, CPU) or a baseband processor. The baseband processor may be configured to process communication data. The CPU may be configured to control the communication apparatus (for example, a network device, a terminal device, or the chip) to execute a software program and process data of the software program. The communication apparatus 2200 may further include a transceiver unit 2205, configured to implement signal input (receiving) and signal output (sending).

For example, the communication apparatus 2200 may be a chip. The transceiver unit 2205 may be an input and/or output circuit of the chip, or the transceiver unit 2205 may be a communication interface of the chip. The chip may be a component of a terminal device, a network device, or another wireless communication device.

The communication apparatus 2200 may include one or more memories 2202. The memory 2202 stores a program 2204, and the program 2204 may be run by the processor 2201 to generate instructions 2203, so that the processor 2201 performs, according to the instructions 2203, the methods described in the foregoing method embodiments. Optionally, the memory 2202 may further store data. Optionally, the processor 2201 may further read the data stored in the memory 2202. The data and the program 2204 may be stored at a same storage address, or the data and the program 2204 may be stored at different storage addresses.

The processor 2201 and the memory 2202 may be disposed separately, or may be integrated together, for example, integrated on a board or integrated into a system on chip (system on chip, SOC).

The communication apparatus 2200 may further include the transceiver unit 2205. The transceiver unit 2205 may be referred to as a transceiver circuit or a transceiver

It should be understood that the steps in the foregoing method embodiments may be completed by using a logic circuit in a form of hardware or instructions in a form of software in the processor 2201. The processor 2201 may be a CPU, a digital signal processor (digital signal processor, DSP), an application-specific integrated circuit (application-specific integrated circuit, ASIC), a field programmable gate array (field programmable gate array, FPGA), or another programmable logic device, for example, a discrete gate or a transistor logic device, or a discrete hardware component.

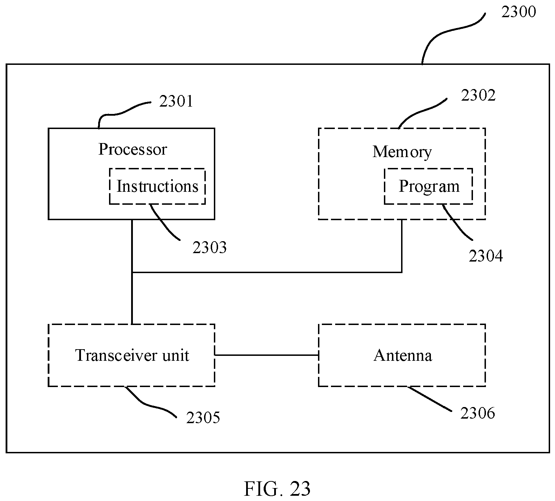

FIG. 23 is another schematic diagram of a structure of a communication apparatus according to an embodiment of this application. The communication apparatus 2300 may be configured to implement the method related to the first relay device described in the foregoing method embodiments. The communication apparatus 2300 may be a chip.

The communication apparatus 2300 includes one or more processors 2301. The one or more processors 2301 may support the communication apparatus 2300 in implementing the communication methods in FIG. 6 to FIG. 10. The processor 2301 may be a general-purpose processor or a dedicated processor. For example, the processor 2301 may be a central processing unit (central processing unit, CPU) or a baseband processor. The baseband processor may be configured to process communication data. The CPU may be configured to control the communication apparatus (for example, a network device, a terminal device, or the chip) to execute a software program and process data of the software program. The communication apparatus 2300 may further include a transceiver unit 2305, configured to implement signal input (receiving) and signal output (sending).

For example, the communication apparatus 2300 may be a chip. The transceiver unit 2305 may be an input and/or output circuit of the chip, or the transceiver unit 2305 may be a communication interface of the chip. The chip may be a component of a terminal device, a network device, or another wireless communication device.

The communication apparatus 2300 may include one or more memories 2302. The memory 2302 stores a program 2304, and the program 2304 may be run by the processor 2301 to generate instructions 2303, so that the processor 2301 performs, according to the instructions 2303, the methods described in the foregoing method embodiments. Optionally, the memory 2302 may further store data. Optionally, the processor 2301 may further read the data stored in the memory 2302. The data and the program 2304 may be stored at a same storage address, or the data and the program 2304 may be stored at different storage addresses.

The processor 2301 and the memory 2302 may be disposed separately, or may be integrated together, for example, integrated on a board or integrated into a system on chip (system on chip, SOC).

The communication apparatus 2300 may further include a transceiver unit 2305 and an antenna 2306. The transceiver unit 2305 may be referred to as a transceiver circuit or a transceiver, and is configured to implement a transceiver function of the communication apparatus via the antenna 2306.

It should be understood that the steps in the foregoing method embodiments may be completed by using a logic circuit in a form of hardware or instructions in a form of software in the processor 2301. The processor 2301 may be a CPU, a digital signal processor (digital signal processor, DSP), an application-specific integrated circuit (application-specific integrated circuit, ASIC), a field programmable gate array (field programmable gate array, FPGA), or another programmable logic device, for example, a discrete gate or a transistor logic device, or a discrete hardware component.

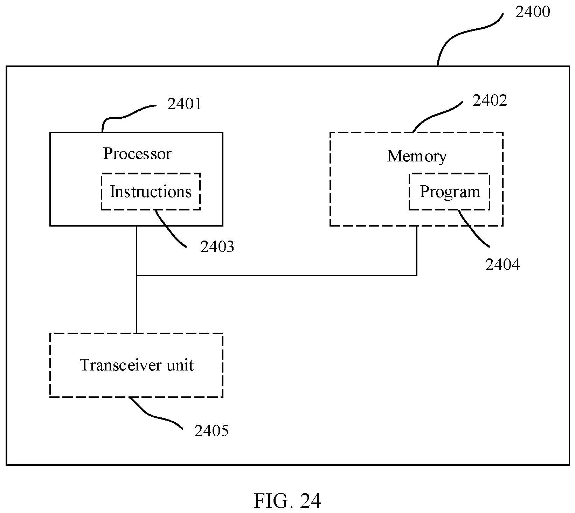

FIG. 24 is another schematic diagram of a structure of a communication apparatus according to an embodiment of this application. The communication apparatus 2400 may be configured to implement the method related to the first relay device described in the foregoing method embodiments. The communication apparatus 2400 may be a chip.

The communication apparatus 2400 includes one or more processors 2401. The one or more processors 2401 may support the communication apparatus 2400 in implementing the communication methods in FIG. 6 to FIG. 10. The processor 2401 may be a general-purpose processor or a dedicated processor. For example, the processor 2401 may be a central processing unit (central processing unit, CPU) or a baseband processor. The baseband processor may be configured to process communication data. The CPU may be configured to control the communication apparatus (for example, a network device, a terminal device, or the chip) to execute a software program and process data of the software program. The communication apparatus 2400 may further include a transceiver unit 2405, configured to implement signal input (receiving) and signal output (sending).

For example, the communication apparatus 2400 may be a chip. The transceiver unit 2405 may be an input and/or output circuit of the chip, or the transceiver unit 2405 may be a communication interface of the chip. The chip may be a component of a terminal device, a network device, or another wireless communication device.

The communication apparatus 2400 may include one or more memories 2402. The memory 2402 stores a program 2404, and the program 2404 may be run by the processor 2401 to generate instructions 2403, so that the processor 2401 performs, according to the instructions 2403, the methods described in the foregoing method embodiments. Optionally, the memory 2402 may further store data. Optionally, the processor 2401 may further read the data stored in the memory 2402. The data and the program 2404 may be stored at a same storage address, or the data and the program 2404 may be stored at different storage addresses.

The processor 2401 and the memory 2402 may be disposed separately, or may be integrated together, for example, integrated on a board or integrated into a system on chip (system on chip, SOC).

The communication apparatus 2400 may further include the transceiver unit 2405. The transceiver unit 2405 may be referred to as a transceiver circuit or a transceiver

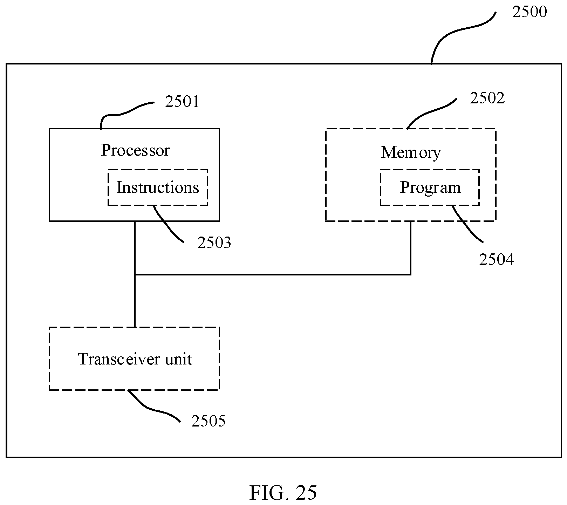

FIG. 25 is another schematic diagram of a structure of a communication apparatus according to an embodiment of this application. The communication apparatus 2500 may be configured to implement the method related to the first relay device described in the foregoing method embodiments. The communication apparatus 2500 may be a chip.

The communication apparatus 2500 includes one or more processors 2501. The one or more processors 2501 may support the communication apparatus 2500 in implementing the communication methods in FIG. 6 to FIG. 10. The processor 2501 may be a general-purpose processor or a dedicated processor. For example, the processor 2501 may be a central processing unit (central processing unit, CPU) or a baseband processor. The baseband processor may be configured to process communication data. The CPU may be configured to control the communication apparatus (for example, a network device, a terminal device, or the chip) to execute a software program and process data of the software program. The communication apparatus 2500 may further include a transceiver unit 2505, configured to implement signal input (receiving) and signal output (sending).

For example, the communication apparatus 2500 may be a chip. The transceiver unit 2505 may be an input and/or output circuit of the chip, or the transceiver unit 2505 may be a communication interface of the chip. The chip may be a component of a terminal device, a network device, or another wireless communication device.

The communication apparatus 2500 may include one or more memories 2502. The memory 2502 stores a program 2504, and the program 2504 may be run by the processor 2501 to generate instructions 2503, so that the processor 2501 performs, according to the instructions 2503, the methods described in the foregoing method embodiments. Optionally, the memory 2502 may further store data. Optionally, the processor 2501 may further read the data stored in the memory 2502. The data and the program 2504 may be stored at a same storage address, or the data and the program 2504 may be stored at different storage addresses.

The processor 2501 and the memory 2502 may be disposed separately, or may be integrated together, for example, integrated on a board or integrated into a system on chip (system on chip, SOC).

The communication apparatus 2500 may further include the transceiver unit 2505. The transceiver unit 2505 may be referred to as a transceiver circuit or a transceiver

It should be understood that the steps in the foregoing method embodiments may be completed by using a logic circuit in a form of hardware or instructions in a form of software in the processor 1801. The processor 1801 may be a CPU, a digital signal processor (digital signal processor, DSP), an application-specific integrated circuit (application-specific integrated circuit, ASIC), a field programmable gate array (field programmable gate array, FPGA), or another programmable logic device, for example, a discrete gate or a transistor logic device, or a discrete hardware component.

An embodiment of this application further provides a chip system, including a processor, where the processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on a chip (system on a chip, SoC), a central processing unit (central processing unit, CPU), a network processor (network processor, NP), a digital signal processor (digital signal processor, DSP), a microcontroller unit (microcontroller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium. The computer storage medium stores computer-readable instructions. When a computer reads and executes the computer-readable instructions, the computer is enabled to perform the method according to any one of the foregoing method embodiments.

An embodiment of this application further provides a computer program product. When a computer reads and executes the computer program product, the computer is enabled to perform the method according to any one of the foregoing method embodiments.

An embodiment of this application further provides a communication system. The communication system includes a first communication device, a second communication device, a first donor network device, and a second donor network device.

It should be understood that the processor mentioned in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that when the processor is a general purpose processor, a DSP, an ASIC, an FPGA, another programmable logic device, a discrete gate or a transistor logic device, or a discrete hardware component, the memory (a storage module) is integrated into the processor.

It should be understood that, on the premise that no conflict occurs, embodiments described in this application and/or technical features in the embodiments may be randomly combined with each other, and technical solutions obtained through combination shall also fall within the protection scope of this application.

In the several embodiments provided in this application, it should be understood that the disclosed apparatus and method may be implemented in other manners. For example, the foregoing described apparatus embodiments are merely examples. For example, division into modules is merely logical function division and there may be other division during actual implementation.

When a method in embodiments of this application is implemented in a form of a software functional unit and sold or used as an independent product, the method may be stored in a computer-readable storage medium. Based on such an understanding, the technical solutions of this application or a part of the technical solutions may be implemented in a form of a software product. The computer software product is stored in a storage medium, and includes several instructions for indicating a computer device (which may be a personal computer, a server, a network device, or the like) to perform all or a part of the steps of the methods described in embodiments of this application. The storage medium includes at least any medium, for example, a USB flash drive, a removable hard disk, a read-only memory (read-only memory, ROM), a random access memory (random access memory, RAM), a magnetic disk, an optical disc, or the like that can store program code. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
when a radio link failure RLF occurs on a first communication device connected to a first donor network device, performing, by the first communication device, an RLF recovery process; and connecting to a second donor network device;
determining, by the first communication device, that the first donor network device and the second donor network device are different network devices; and
sending, by the first communication device, first information to a second communication device, wherein the first information indicates the second communication device to send a radio resource control RRC re-establishment request message, or indicates the second communication device to receive system information from the first communication device, and the second communication device is a device that communicates with the first donor network device via the first communication device.

2. The method according to claim 1, wherein the system information comprises an identifier of the second donor network device and/or length information of the identifier of the second donor network device.

3. The method according to claim 1 or 2, wherein the determining, by the first communication device, that the first donor network device and the second donor network device are different network devices comprises:
determining, by the first communication device based on an identifier of a newly accessed cell, that the accessed second donor network device is a network device different from the first donor network device.

4. The method according to claim 1 or 2, wherein the determining, by the first communication device, that the first donor network device and the second donor network device are different network devices comprises:
receiving, by the first communication device, second information sent by the second donor network device, wherein the second information indicates that the second donor network device and the first donor network device are different network devices.

5. The method according to any one of claims 1 to 4, wherein the second communication device is a first network device, and the method further comprises:
the first information further indicates the second communication device to send an IP address request message; or
sending, by the first communication device, indication information to the second communication device, wherein the indication information indicates the second communication device to send an IP address request message

6. The method according to any one of claims 1 to 5, wherein the first communication device sends the first information via a backhaul adaptation protocol BAP layer control protocol data unit PDU or a media access control MAC layer control element.

7. A communication method, comprising:
receiving, by a second communication device, first information from a first communication device, wherein the first information indicates the second communication device to send a radio resource control RRC re-establishment request message, or indicates the second communication device to receive system information from the first communication device, and the second communication device is a device that communicates with a first donor network device via the first communication device; and
sending, by the second communication device, the radio resource control RRC re-establishment request message based on the first information.

8. The method according to claim 7, wherein the sending, by the second communication device, the RRC re-establishment request message based on the first information comprises:
receiving, by the second communication device, the system information from the first communication device based on the first information;
determining, by the second communication device, that a second donor network device and the first donor network device are different network devices; and
sending, by the second communication device, the RRC re-establishment request message.

9. The method according to claim 8, wherein the system information comprises an identifier of the second donor network device and/or length information of the identifier of the second donor network device.

10. The method according to any one of claims 7 to 9, wherein the second communication device is a first network device, and the method further comprises:
sending, by the second communication device, an IP address request message based on the first information; or
receiving, by the second communication device, indication information from the first communication device, wherein the indication information indicates the second communication device to send an IP address request message

11. A communication method, comprising:
receiving, by a second donor network device, a radio resource control RRC re-establishment request message from a first communication device;
determining, by the second donor network device, a first donor network device based on the RRC re-establishment request message;
sending, by the second donor network device, request information to the first donor network device, wherein the request information is for requesting context information of the first communication device, the context information comprises a topology relationship between the first communication device and a second communication device, the context information comprises the topology relationship between the first communication device and the second communication device, and the second communication device is a device that communicates with the first donor network device via the first communication device;
receiving, by the second donor network device, the context information from the first donor network device; and
setting up, by the second donor network device, a connection to the second communication device based on the topology relationship.

12. The method according to claim 11, wherein the second communication device is a first network device, and the method further comprises:
allocating, by the second donor network device, an IP address to the second communication device based on the topology relationship.

13. A communication method, comprising:
receiving, by a first donor network device, request information from a second donor network device, wherein the request information is for requesting context information of a first communication device, the context information comprises a topology relationship between the first communication device and a second communication device, and the second communication device is a device that communicates with the first donor network device via the first communication device; and
sending, by the first donor network device, the context information to the second donor network device.

14. A communication apparatus, comprising:
a first processing module, configured to: when a radio link failure RLF occurs on the communication apparatus connected to a first donor network device, perform an RLF recovery process, and connect to a second donor network device, wherein
the first processing module is further configured to determine that the first donor network device and the second donor network device are different network devices; and
a first sending module, configured to send first information to a second communication device, wherein the first information indicates the second communication device to send a radio resource control RRC re-establishment request message, or indicates the second communication device to receive system information from the communication apparatus, and the second communication device is a device that communicates with the first donor network device via the communication apparatus.

15. The apparatus according to claim 14, wherein the system information comprises an identifier of the second donor network device and/or length information of the identifier of the second donor network device.

16. The apparatus according to claim 14 or 15, wherein the first processing module is specifically configured to:
determine, based on an identifier of a newly accessed cell, that the accessed second donor network device is a network device different from the first donor network device.

17. The apparatus according to claim 14 or 15, wherein the apparatus further comprises:
a first receiving module, configured to receive second information sent by the second donor network device, wherein the second information indicates that the second donor network device and the first donor network device are different network devices.

18. The apparatus according to any one of claims 14 to 17, wherein the second communication device is a first network device; and
the first information further indicates the second communication device to send an IP address request message; or
the first sending module is further configured to:
send indication information to the second communication device, wherein the indication information indicates the second communication device to send an IP address request message.

19. The apparatus according to any one of claims 14 to 18, wherein the communication apparatus sends the first information via a backhaul adaptation protocol BAP layer control protocol data unit PDU or a media access control MAC layer control element.

20. A communication apparatus, comprising:
a second receiving module, configured to receive first information from a first communication device, wherein the first information indicates the communication apparatus to send a radio resource control RRC re-establishment request message, or indicates the communication apparatus to receive system information from the first communication device, and the communication apparatus is a device that communicates with a first donor network device via the first communication device; and
a second sending module, configured to send the radio resource control RRC re-establishment request message based on the first information.

21. The apparatus according to claim 20, wherein the second sending module is further configured to:
receive the system information from the first communication device based on the first information;
the apparatus further comprises:
a second processing module, configured to determine that a second donor network device and the first donor network device are different network devices; and
the second sending module is further configured to send the RRC re-establishment request message.

22. The apparatus according to claim 21, wherein the updated system information comprises an identifier of the second donor network device and/or length information of the identifier of the second donor network device.

23. The apparatus according to any one of claims 20 to 22, wherein the apparatus is a first network device, and the second sending module is further configured to:
send an IP address request message based on the first information; or
receive indication information from the first communication device, wherein the indication information indicates the communication apparatus to send an IP address request message.

24. A communication apparatus, comprising:
a third receiving module, configured to receive a radio resource control RRC re-establishment request message from a first communication device;
a third processing module, configured to determine a first donor network device based on the RRC re-establishment request message; and
a third sending module, configured to send request information to the first donor network device, wherein the request information is for requesting context information of the first communication device, the context information comprises a topology relationship between the first communication device and a second communication device, and the second communication device is a device that communicates with the first donor network device via the first communication device, wherein
the third receiving module is further configured to receive the context information from the first donor network device; and
the third processing module is further configured to set up a connection to the second communication device based on the topology relationship.

25. The apparatus according to claim 24, wherein the second communication device is a first network device, and the second processing module is further configured to:
allocate an IP address to the second communication device based on the topology relationship.

26. A communication apparatus, comprising:
a fourth receiving module, configured to receive request information from a second donor network device, wherein the request information is for requesting context information of a first communication device, the context information comprises a topology relationship between the first communication device and a second communication device, and the second communication device is a device that communicates with the communication apparatus via the first communication device; and
a fourth sending module, configured to send the context information to the second donor network device.

27. A communication apparatus, wherein the apparatus is configured to perform the method according to any one of claims 1 to 13.

28. A communication apparatus, comprising a processor, wherein
the processor is coupled to a memory, and is configured to invoke a computer program from the memory and run the computer program, to perform the method according to any one of claims 1 to 13.

29. A communication apparatus, comprising a processor and a memory, wherein
the memory is configured to store a computer program, and the processor is configured to invoke the computer program from the memory and run the computer program, to perform the method according to any one of claims 1 to 13.

30. A computer-readable storage medium, wherein the computer-readable storage medium stores a computer program to be executed by a device, and the computer program comprises program instructions for performing the method according to any one of claims 1 to 13.

31. A chip, wherein the chip comprises a processor and a data interface, and the processor reads, through the data interface, program instructions stored in a memory, to perform the method according to any one of claims 1 to 13.
